# EUROPEAN PATENT APPLICATION

(11) **EP 4 723 608 A1**
(43) Date of publication of application: **08.04.2026**
(21) Application number: 24819234.6
(22) Date of filing: 29.05.2024
(51) Int. Cl.: H04N 1/00

(54) **IMAGE READING DEVICE, CONTROL METHOD THEREFOR, AND PROGRAM**

(30) Priority: 05.06.2023 JP 2023092652; 12.06.2023 JP 2023096444; 29.06.2023 JP 2023107199
(71) Applicant: Canon Denshi Kabushiki Kaisha, Chichibu-shi, Saitama 369-1892 (JP)
(72) Inventor: TADOKORO, Shigeru, Chichibu-shi, Saitama 369-1892 (JP); OKANO, Toshifumi, Chichibu-shi, Saitama 369-1892 (JP); NEMOTO, Yusuke, Chichibu-shi, Saitama 369-1892 (JP); NEGISHI, Tomoki, Chichibu-shi, Saitama 369-1892 (JP); WATANABE, Hirotaka, Chichibu-shi, Saitama 369-1892 (JP); HOANG, Thi Dung, Chichibu-shi, Saitama 369-1892 (JP)
(74) Representative: TBK
(86) International application number: PCT/JP2024/019717
(87) International publication number: WO 2024/253003

(57) **Abstract**

An image reading apparatus is configured to, in a case where access is accepted from a terminal apparatus communicable via a network, establish a session with the terminal apparatus and manage the session. The image reading apparatus is configured to, in accordance with a reading instruction received via the session, perform reading processing for reading an image of an original to generate image data of the read image. The image reading apparatus continues execution of the reading processing as long as access has been accepted via the session at a preset time interval.

## Description

### TECHNICAL FIELD

The present invention relates to an image reading apparatus, a control method therefor, and a program.

### BACKGROUND ART

By reading images of originals with an image reading apparatus and generating image data of the read images, it is possible to electronically store the image data corresponding to the images of the originals, and perform information processing using such image data. In the case of using an original reading apparatus including an auto document feeder (ADF), it is possible to more efficiently read a large amount of original images, and generate image data thereof. Image data of read images obtained by image reading processing (scan processing) can be transferred to a terminal apparatus (information processing apparatus) such as a PC or a mobile terminal, and be viewed and used for data processing.

An image reading apparatus equipped with a web server in order to enable access by a web browser in an external apparatus, can accept a scan instruction via an operation screen provided to the web browser, without requiring a dedicated application or driver. PTL 1 describes a technique by which an image reading apparatus starts scan processing in response to a scan instruction accepted via a setting screen provided to a web browser, thereafter transitions to a scan-in-progress status, and provides image data via the web browser as long as that status remains unchanged.

### CITATION LIST

### PATENT LITERATURE

PTL 1: Japanese Patent Laid-Open No. 2018-011307

### SUMMARY OF INVENTION

### TECHNICAL PROBLEM

According to the above-described technique, if a session between the terminal apparatus such as a mobile terminal or a PC and the image reading apparatus is accidentally disconnected during execution of the scan processing, the image reading apparatus is no longer able to identify (determine) the terminal apparatus that was the transmission source of the scan instruction. The disconnection of the session (connection) may occur as a result of, for example, the terminal apparatus transitioning to a power saving mode, or a display screen of the web browser transitioning to a different screen. In a case where the terminal apparatus that was the transmission source of the scan instruction can no longer be identified, the image data of the read images obtained by the scan processing may no longer be transmitted to the terminal apparatus.

### SOLUTION TO PROBLEM

In view of the above, the present invention provides a technique for enabling an image reading apparatus to transmit image data of a read image to a terminal apparatus even in a case where a session with the terminal apparatus is disconnected during execution of reading processing (scan processing).

According to one aspect of the present disclosure, there is provided a n image reading apparatus comprising: management means for, in a case where access is accepted from a terminal apparatus communicable via a network, establishing a session with the terminal apparatus and managing the session; and processing means for, in accordance with a reading instruction received via the session, performing reading processing for reading an image of an original to generate image data of the read image, wherein the processing means continues execution of the reading processing as long as access has been accepted via the session at a preset time interval.

### ADVANTAGEOUS EFFECTS OF INVENTION

The present invention enables an image reading apparatus to transmit image data of a read image to a terminal apparatus even in a case where a session with the terminal apparatus is disconnected during execution of reading processing (scan processing). Accordingly, it is possible to reduce the possibility that image data of a read image is lost due to disconnection of a session, thus increasing user convenience.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.

FIG. 1 is a cross-sectional view showing a schematic configuration example of an image reading apparatus 100.
FIG. 2 is a cross-sectional view showing a schematic configuration example of an image reading unit 104.
FIG. 3 is a block diagram showing a hardware configuration example of the image reading apparatus 100.
FIG. 4 is a configuration example showing an image reading system.
FIG. 5 is a block diagram showing a functional configuration example of the image reading apparatus 100.
FIG. 6 shows an example of a setting screen for scan settings displayed on a terminal 200.
FIG. 7 is a flowchart illustrating an example of a procedure of terminal determination processing performed in the image reading apparatus 100.
FIG. 8 shows an example of a management table used for terminal management.
FIG. 9 shows an example of a setting screen for setting an approval method.
FIG. 10 is a flowchart illustrating an example of a procedure of image reading processing performed in the image reading apparatus 100.
FIG. 11 is a flowchart illustrating an example of a procedure of approval processing performed in a terminal 300.
FIG. 12 shows an example of an operation screen for approval processing.
FIG. 13 shows an example of a setting screen for setting a transmission method.
FIG. 14 is a flowchart illustrating an example of a procedure of image reading processing performed in the image reading apparatus 100.
FIG. 15 shows an example of read image information.
FIG. 16 is a flowchart illustrating an example of a procedure of processing (S 1405) for determining a transmission destination of image data of read images.
FIG. 17A shows an example of a login screen.
FIG. 17B shows an example of a scan setting screen.
FIG. 17C shows an example of a job registration screen.
FIG. 18 is a flowchart illustrating an example of a procedure of a scan operation.
FIG. 19 shows an example of a favorite scan screen displayed in the terminal 200.
FIG. 20 is a flowchart illustrating an example of a procedure of a scan operation based on a scan setting registered as a favorite.
FIG. 21 shows an example of a screen displayed on an operation unit 130.

### DESCRIPTION OF EMBODIMENTS

Hereinafter, embodiments will be described in detail with reference to the accompanying drawings. It should be noted that the following embodiments are not intended to limit the scope of the claimed invention, and that not all the combinations of features described in the embodiments are necessarily essential for the invention. Two or more of the multiple features described in the embodiments may be combined as appropriate. Furthermore, the same reference numerals are given to the same or similar configurations, and redundant description thereof is omitted.

### First Embodiment

First, a configuration example of an image reading apparatus (document feeder) according to a first embodiment will be described.

### <Image Reading Apparatus>

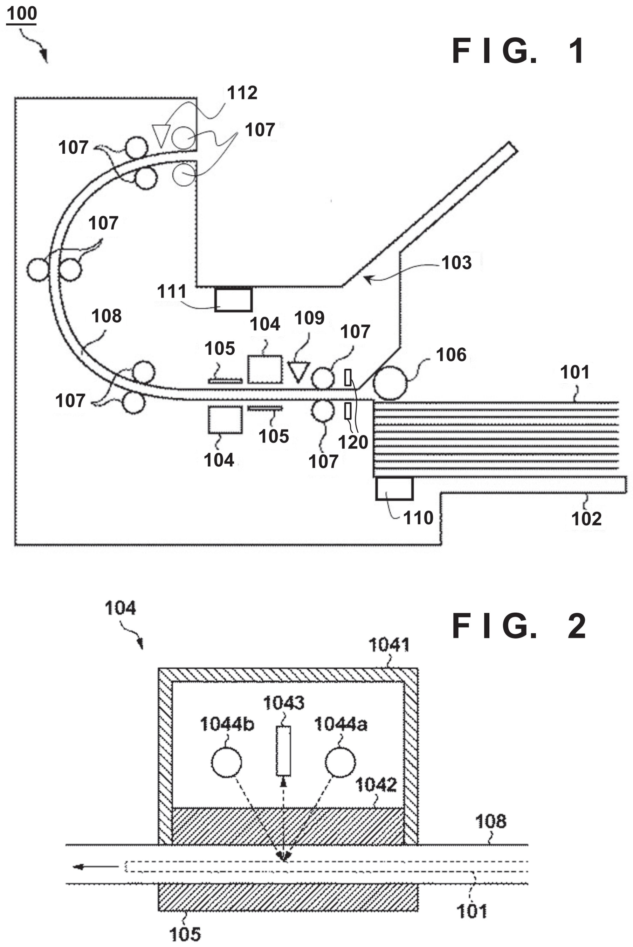

FIG. 1 is a cross-sectional view showing a schematic configuration example of an image reading apparatus 100 according to the present embodiment. The image reading apparatus 100 includes an original platen 102 on which originals 101 to be read are loaded. The originals on the original platen 102 are detected by an original detection sensor 110. The originals on the original platen 102 are individually separated and fed out one by one onto a conveyance path 108 by a sheet feed roller 106. Each original 101 that is fed out to the conveyance path 108 and conveyed on the conveyance path 108 is detected by a registration sensor 109. When the original 101 has been detected by the registration sensor 109, the image reading unit 104 starts reading an image (image formed on the original) of the original 101 being conveyed on the conveyance path 108.

As shown in FIG. 1, the image reading apparatus 100 of the present embodiment includes two image reading units 104 on both sides of the conveyance path 108. One of the image reading units 104 is configured to read an image of a first surface (front surface) of the original 101, and the other image reading unit 104 is configured to read an image of a second surface (back surface) of the original 101. Background plates 105 are disposed at positions opposing the respective corresponding image reading units 104 with the conveyance path 108 interposed therebetween. Each of the background plates 105 is a black member, for example. Note that the image reading apparatus 100 may be configured to include only one image reading unit 104.

Each original 101 whose image has been read by the image reading units 104 is conveyed on the conveyance path 108 toward a discharge unit 103 by conveyance rollers 107, and is finally discharged to the discharge unit 103 and loaded in the discharge unit 103. An original detection sensor 111 provided in the discharge unit 103 is used to detect the original 101 discharged and loaded in the discharge unit 103. An original detection sensor 112 provided in the vicinity of a discharge port of the conveyance path 108 is used to detect any original 101 remaining on the conveyance path 108. Using the original detection sensors 111 and 112 makes it possible to detect whether the original 101 remains on the conveyance path 108, or has been discharged to the discharge unit 103.

The image reading apparatus 100 further includes multi-feed detection sensors 120 at a position between the sheet feed roller 106 and the registration sensor 109 along the conveyance path 108. The multi-feed detection sensors 120 are used to detect multi-feed in which a plurality of originals are conveyed on the conveyance path 108 in a state in which the originals overlap each other (a state in which the plurality of originals are in close contact with each other due to static electricity or the like). The multi-feed detection sensors 120 are each formed by, for example, an ultrasonic sensor including an ultrasonic wave transmission unit and an ultrasonic wave reception unit. In the case of using the ultrasonic sensor, multi-feed can be detected based on the amount of attenuation of ultrasonic waves passing through the original (original sheet) on the conveyance path 108.

FIG. 2 is a cross-sectional view showing a schematic configuration example of the image reading unit 104. The image reading unit 104 includes a casing 1041, and a glass plate 1042 provided so as to face the conveyance path 108. The interior of the image reading unit 104 is sealed by the casing 1041 and the glass plate 1042. An image sensor 1043, and a pair of light-emitting units 1044a and 1044b are provided inside the image reading unit 104.

The image sensor 1043 is formed by a line image sensor, and may be formed by, for example, a CCD line sensor or a contact image sensor. The image sensor 1043 is disposed along a direction (main scanning direction) orthogonal to the conveyance direction of the original 101. The image sensor 1043 reads an image of the original 101 being conveyed, line by line in the main scanning direction, and outputs image signals.

The light-emitting unit 1044a includes a light source disposed on the upstream side in the conveyance direction of the original 101 relative to the image sensor 1043. The light-emitting unit 1044b includes a light source disposed on the downstream side in the conveyance direction of the original 101 relative to the image sensor 1043. The image sensor 1043 is disposed at a position sandwiched between the light-emitting unit 1044a and the light-emitting unit 1044b. Each of the light-emitting units 1044a and 1044b is disposed along the main scanning direction, parallel to the image sensor 1043, and is formed by an LED array including a plurality of LEDs. As shown in FIG. 2, the image sensor 1043 reads an image on the original 101 by receiving light reflected from light emitted to the original 101 by the light-emitting units 1044a and 1044b.

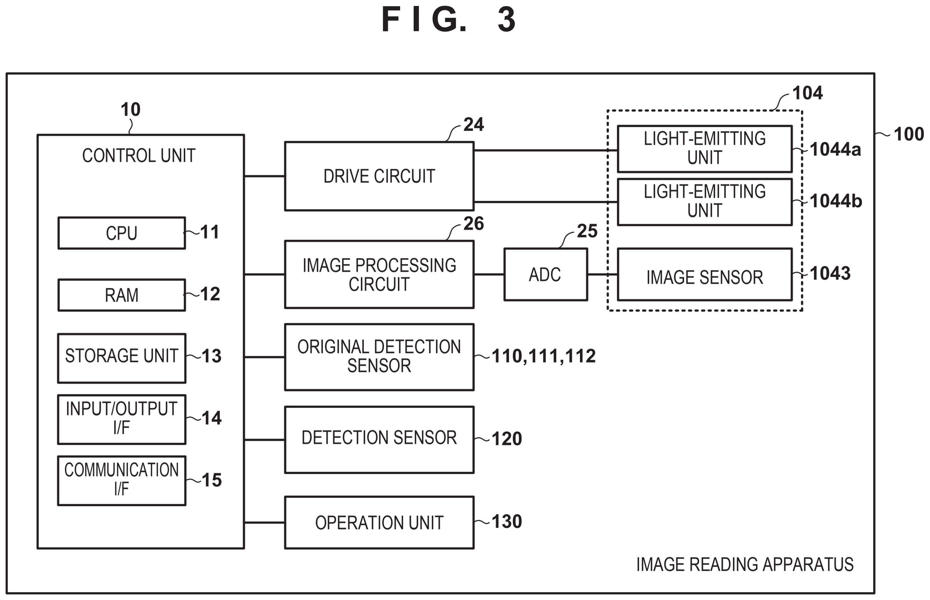

FIG. 3 is a block diagram showing a hardware configuration example of the image reading apparatus 100 according to the present embodiment. A control unit 10 of the image reading apparatus 100 includes a CPU 11, a random access memory (RAM) 12, a storage unit 13, an input/output interface (I/F) 14, and a communication I/F 15.

The CPU 11 is formed by one or more processors. The CPU 11 performs overall control of the image reading apparatus 100 by reading out a program stored in the storage unit 13 to the RAM 12. The RAM 12 is used as a work area by the CPU 11. The storage unit 13 is configured to store various types of programs (e.g., a control program) executed by the control unit 10, and various types of information or data used for processing performed by the control unit 10. For example, image data obtained by reading an image of the original by the image sensor 1043 is saved in the storage unit 13. The storage unit 13 is formed by, for example, one or more storage devices (memories) such as a read-only memory (ROM), a hard disk drive (HDD), and a solid-state drive (SSD).

A drive circuit 24 and an image processing circuit 26 are connected to the input/output I/F 14. The drive circuit 24 drives the light-emitting units 1044a and 1044b of the image reading unit 104. The image processing circuit 26 is connected to the image sensor 1043 via an analog/digital converter (ADC) 25. The image sensor 1043 reads an image of the original 101 being conveyed, line by line in the main scanning direction, and outputs an image signal. The ADC 25 converts an image signal in an analog form output from the image sensor 1043 into image data in a digital form, and outputs the image data. The image processing circuit 26 performs image processing such as shading correction on the image data output from the ADC 25. The CPU 11 acquires the image data output from the image processing circuit 26.

The communication I/F 15 is an interface for communicating with an external apparatus, and may be formed by, for example, a wired communication interface, a wireless communication interface for wireless LAN communication or Bluetooth (registered trademark) communication or the like, a USB interface, or an SCSI interface or the like. As an example, in the present embodiment, the communication I/F 15 is assumed to be a wired communication interface connected to a wired local area network (LAN). Note that the image reading apparatus 100 may include a plurality of communication I/Fs 15 connected to the respective corresponding external apparatuses or networks. For example, the image reading apparatus 100 may include, as the plurality of communication I/Fs 15, a USB or SCSI interface directly connected to a given external apparatus, and a wired communication interface connected to a wired LAN.

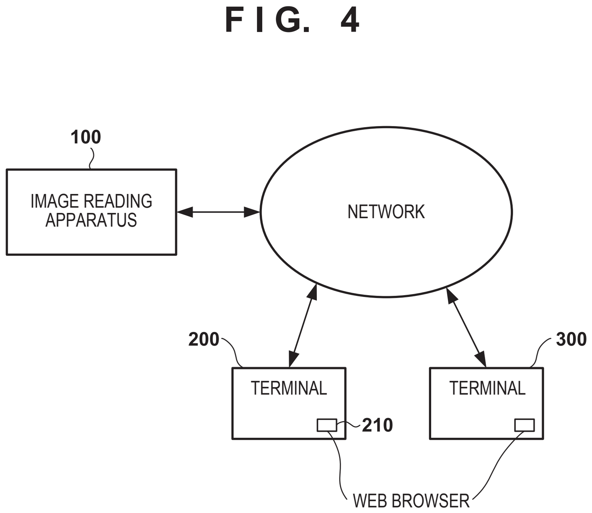

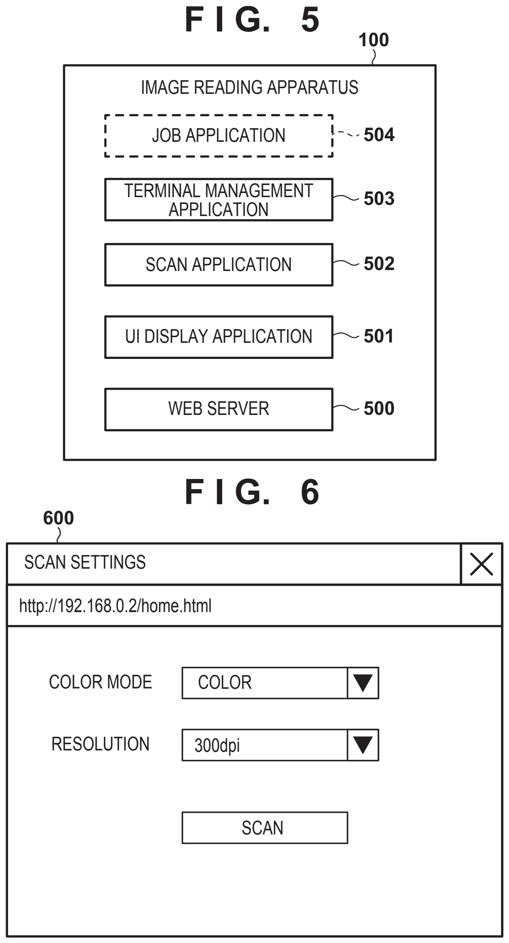

The communication I/F 15 is capable of communicating with an external apparatus in accordance with any given communication protocol, and capable of communicating with an external apparatus via any given communication path. In the case of being connected to a plurality of external apparatuses, communication protocols and communication paths that vary from one external apparatus to another may be used. For example, the communication I/F 15 may be configured to communicate with a terminal 200 (FIG. 4) in accordance with an HTTP protocol, and communicate with a terminal 300 (FIG. 4) in accordance with an FTP protocol. The image reading apparatus 100 of the present embodiment includes a web server 500 (FIG. 5) capable of communicating with an external apparatus in accordance with an HTTP protocol. Accordingly, an external apparatus is capable of accessing the web server 500 of the image reading apparatus 100 using a web browser operating on the external apparatus.

The image reading apparatus 100 includes an operation unit 130 connected to the control unit 10. The operation unit 130 includes an input unit and an output unit. The input unit includes a touch panel and a hardware key or the like, and accepts various operations from a user. The output unit (display unit) includes a display apparatus such as a liquid crystal display, and outputs (displays) various types of information to the user. The input unit and the output unit may be implemented as one module such as a touch panel display.

A screen showing the current state (status) of the scanner (image reading apparatus 100) may be displayed on the operation unit 130 by the CPU 11. Examples of the status of the scanner include a state in which a jam occurs in which originals (sheets) become stuck on the conveyance path, a state in which the conveyance of originals is intentionally stopped as a result of detection of multi-feed, a cover-open state in which an original cannot be conveyed because the cover of the image reading apparatus 100 is open, a scan-in-progress state in which an original is being conveyed and scanned, and a state in which image processing on image data obtained by scanning an image of an original is being performed. The above-described scanner states may be indicated using character strings or icons on the screen displayed on the operation unit 130. The operation unit 130 may indicate the above-described scanner states using sound or LED blinking or the like. Note that the operation unit 130 may be provided with a display device formed by a segmented LED.

### <Image Reading Processing>

In the image reading apparatus 100, upon accepting an instruction to start reading an original (reading instruction), for example, through operation of the operation unit 130, or from an external apparatus, the control unit 10 (CPU 11) starts image reading processing on the original 101 set on the original platen 102. In the image reading processing, the CPU 11 first drives the sheet feed roller 106 to start conveyance of the original 101 from the original platen 102. When a plurality of originals 101 are set on the original platen 102, the originals are separated and conveyed one by one on the conveyance path 108. Thereafter, when an original 101 is detected by the registration sensor 109, the CPU 11 controls the image reading unit 104 for reading an image of the original 101, using the timing of this detection as a reference.

Specifically, the CPU 11 performs reading of an image of the original 101 by controlling emission of the light-emitting unit 1044a and the light-emitting unit 1044b, and driving the image sensor 1043. The image reading unit 104 reads the image of the original 101 using the image sensor 1043, generates image data of the read image, and outputs the generated image data to the control unit 10. The control unit 10 saves the obtained image data in the storage unit 13 of the image reading apparatus 100. Note that the image data may be saved in an external apparatus (server apparatus) capable of communicating with the image reading apparatus 100.

### <Configuration and Operation of Image Reading System>

FIG. 4 shows a configuration example of an image reading system according to the present embodiment. The image reading system includes the image reading apparatus 100, and terminal apparatuses (terminals) 200 and 300 capable of communicating with the image reading apparatus 100 via a network. The network includes a wired LAN and a wireless LAN or the like. In the present embodiment, the communication I/F 15 of the image reading apparatus 100 is communicably connected to the terminal 200 and the terminal 300 via the network. Note that the network may include a mobile network, the Internet, a public wireless line, and the like.

The terminals 200 and 300 are each formed by, for example, an information processing apparatus such as a personal computer (PC) or a mobile terminal. For example, when the terminal 200 or 300 is formed by a mobile terminal such as a smartphone or a tablet terminal, the terminal may communicate with the image reading apparatus 100 by wirelessly connecting to a wireless access point for wireless LAN communication, and connecting to a wired LAN via the wireless access point.

In the present embodiment, the terminal 200 is a terminal apparatus used by a user (operation user) operating the image reading apparatus 100. Note that the terminals 200 and 300 are used by users different from each other. In the following, the terminal 200 will be mainly described. However, the same description also applies to the terminal 300.

A web browser 210 is pre-installed in the terminal 200. The user operates the image reading apparatus 100 via the web browser 210 operating on the terminal 200. In accordance with the user operation, the terminal 200 accesses the web server 500 of the image reading apparatus 100 using the web browser 210. Thus, the web browser 210 acquires, from the web server 500, Hyper Text Markup Language (HTML) data as screen data corresponding to an operation screen for operating the image reading apparatus 100, and displays the operation screen based on the acquired HTML data. Upon accepting an instruction (scan instruction) to start reading an original from the user via the displayed operation screen, the terminal 200 (web browser 210) transmits the scan instruction to the image reading apparatus 100.

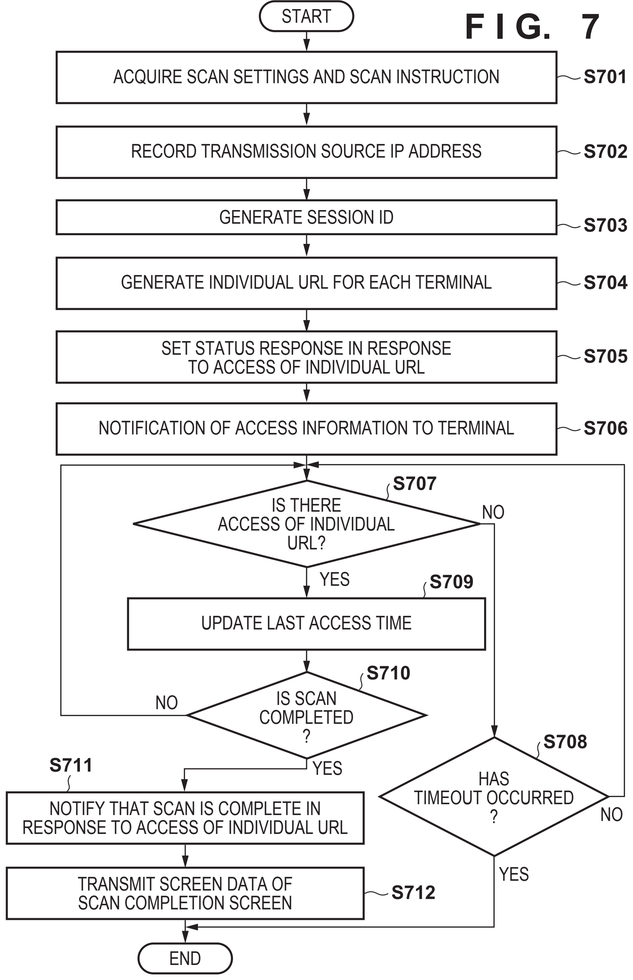

In accordance with the scan instruction received from the terminal 200, the image reading apparatus 100 performs the image reading processing (scan processing) in the above-described manner. The image reading apparatus 100 starts conveying an original 101, performs reading of the original using the image reading unit 104, and saves the obtained image data of the read images in the storage unit 13. In parallel with the scan processing, the image reading apparatus 100 performs terminal determination processing, which will be described later with reference to FIG. 7, using the web server 500 (FIG. 5). The saved image data is thereafter transmitted (downloaded) to an external apparatus such as the terminal 200 via a network.

As will be described later, while performing the scan processing in accordance with the scan instruction from the terminal 200, the image reading apparatus 100 of the present embodiment accepts access from the terminal 200 using an individual URL (individual URL for status acquisition) generated by terminal determination processing. By accessing the individual URL, the terminal 200 can acquire status information indicating the status ("scan-in-progress", "scan completed", "error occurring", or the like, etc.) of the image reading apparatus 100. In addition, the terminal 200 can be provided with an operation screen (status screen) including status display, and display the operation screen using the web browser 210.

Upon completion of the scan processing, the image reading apparatus 100 transmits HTML data of an operation screen for downloading (acquiring) image data saved in the storage unit 13 to the terminal 200 in response to the access to the individual URL. This HTML data describes an URL for referring to (receiving) the image data. Using a link for accessing the aforementioned URL that is included in the operation screen displayed using the web browser 210 based on the HTML data, the user of the terminal 200 can instruct downloading of the image data.

In response to completion of the scan processing, the image reading apparatus 100 may guide (i.e., redirect) the terminal 200 so as to change the access destination from the individual URL for status acquisition to the individual URL for downloading. Thus, the image reading apparatus 100 may perform display control to shift the display screen of the web browser 210, from the status screen provided in response to the access to the individual URL to the download screen that enables an operation of downloading image data. After the terminal 200 has acquired the image data of the read image saved in the storage unit 13, the image reading apparatus 100 performs processing for deleting (discarding) the image data from the storage unit 13.

Note that, after starting the scan processing in accordance with the scan instruction from the terminal 200, the image reading apparatus 100 of the present embodiment operates so as not to provide a scan setting screen (FIG. 6) to another terminal (the terminal 300 or the like) until the terminal 200 acquires image data of the read images. In this case, even when the web browser of the terminal 300 accesses the web server 500 of the image reading apparatus 100, the web browser cannot acquire screen data of the scan setting screen, and cannot display the scan setting screen. However, the present disclosure is not limited thereto, and the image reading apparatus 100 may be configured to provide the scan setting screen to another terminal.

### <Functional Configuration of Image Reading Apparatus>

FIG. 5 is a block diagram showing a functional configuration example (software configuration example) of the image reading apparatus 100. The image reading apparatus 100 includes the web server 500 as an application operating on an OS. At the time of activating the image reading apparatus 100, the CPU 11 activates the OS, and thereafter activates the web server 500. The web server 500 operates as a process that is resident on the CPU 11, and waits until receiving a request via the network. In response to receiving a request, the web server 500 returns a response according to the request.

The image reading apparatus 100 includes, as applications that operate on the web server 500, a UI display application (UI display app) 501, a scan application (scan app) 502, and a terminal management application (terminal management app) 503. The UI display app 501, the scan app 502, and the terminal management app 503 are activated in response to activation of the web server 500, and operate on the web server 500.

The UI display app 501 controls the display of a screen on the operation unit 130. In accordance with an instruction (scan instruction) to start image reading processing accepted by the web server 500, the scan app 502 controls the image reading unit 104 via a scanner driver (not shown), thereby performing image reading processing (scan processing). Through terminal determination processing, which will be described later, the terminal management app 503 generates a session ID and a URL unique to the session ID for a terminal that accesses the image reading apparatus 100 (web server 500), and uses the session ID and the URL to manage the terminal and perform determination (identification) of the terminal.

### <Procedure of Image Reading Processing>

In the procedure described below, the image reading processing (scan processing) is performed in accordance with a reading instruction (scan instruction) transmitted from the terminal 200 to the image reading apparatus 100. The user of the terminal 200 operates the terminal 200 to activate the web browser 210, and inputs, to a URL input field on a browser screen displayed by the web browser 210, a URL (in the present embodiment, "http://192.168.0.2/") indicating the web server 500 of the image reading apparatus 100. Thus, the web browser 210 of the terminal 200 accesses the web server 500 in order to establish communication with the web server 500 of the image reading apparatus 100.

Upon accepting the access from the terminal 200 (web browser 210), the web server 500 establishes communication with the terminal 200. The communication between the image reading apparatus 100 (web server 500) and the terminal 200 (web browser 210) is performed using an HTTP protocol, for example. Note that the communication between the image reading apparatus 100 and the terminal 200 may be realized using an application other than the web server 500 of the image reading apparatus 100 and the web browser 210 of the terminal 200.

When communication (connection) between the web server 500 and the web browser 210 is established, the web browser 210 acquires HTML data (screen data) of a setting screen (scan setting screen) for reading settings from the web server 500. Based on the HTML data acquired from the web server 500, the web browser 210 displays, on a display unit of the terminal 200, a scan setting screen 600 illustrated in FIG. 6.

On the scan setting screen 600, for example, reading color mode and resolution in image reading can be set. Using an operation unit (e.g., a touch panel) of the terminal 200, the user inputs a reading setting (scan setting). When a scan button is pressed by the operation user on the scan setting screen 600, the web browser 210 transmits the scan setting and a scan instruction to the web server 500.

Note that, when the image reading apparatus 100 received a scan instruction from another terminal (the terminal 300 or the like) during operation of the scan setting screen 600, and has started scan processing, the web server 500 operates so as not to accept a scan instruction from the web browser 210. Also, in a state in which the started scan processing is stopped due to the occurrence of an error, the web server 500 also operates so as not to accept a scan instruction from the web browser 210. In this case, based on the HTML data transmitted from the web server 500, the web browser 210 displays a screen including a message (e.g., "Another user is now performing a scan. Please wait for a while.") indicating that it is necessary to wait until a scan instruction can be transmitted.

Upon receiving a scan setting and a scan instruction from the terminal 200 (web browser 210), the web server 500 transfers the scan setting and the scan instruction to the scan app 502. Based on the scan setting and the scan instruction received from the terminal 200, the scan app 502 starts execution of the scan processing.

The scan app 502 conveys originals set on the original platen 102 one by one in order, and controls the scan processing so as to read images of the originals using the image reading unit 104. The scan processing is continued until there are no originals set on the original platen 102. Note that a predetermined number of originals may be subjected to reading, or the number of originals to be read may be set in the scan setting received from the terminal 200. In that case, the number of originals to be read may be added as a setting item on the scan setting screen 600. The scan app 502 saves the image data generated by the image reading unit 104 in the storage unit 13. Upon completion of saving the image data, the scan app 502 notifies completion of the scan processing to the terminal management app 503, and ends execution of the scan processing.

Note that, when the scan processing is suspended due to the occurrence of an error, the scan app 502 displays, on the operation unit 130, a message indicating the occurrence of an error (via the UI display app 501), and suspends the scan processing while holding the session ID. Upon confirming that the error has been eliminated, the scan app 502 displays, on the operation unit 130, a button for instructing to resume the scan processing. When the resumption instruction is performed using the button, reconnection is established using the same session ID as that used before the suspension, and the scan processing is resumed.

### <Terminal Determination Processing>

FIG. 7 is a flowchart illustrating an example of a procedure of terminal determination processing performed in the image reading apparatus 100. The terminal determination processing is performed by the terminal management app 503. The processing performed in accordance with this procedure is started in response to the web server 500 receiving an HTTP request including a scan setting and a scan instruction from the web browser 210 of the terminal 200, and transferring the HTTP request to the terminal management app 503. As described above, the terminal determination processing is performed in parallel with the scan processing performed by the scan app 502.

In S701, the terminal management app 503 (CPU 11) acquires the scan setting and the scan instruction by receiving the above-described HTTP request from the scan app 502, and advances the processing to S702. In S702, the terminal management app 503 records, as a transmission source IP address of the scan instruction, an IP address of the terminal 200 acquired from the received HTTP request, and advances the processing to S703.

In S703, the terminal management app 503 issues (generates) a session ID (in association with the transmission source IP address) for the terminal 200. Note that the scan app 502 receives a scan instruction (reading instruction) via a session established with the terminal 200 (web browser 210), and performs the scan processing in accordance with the received scan instruction. The issued session ID is for identifying the session established with the terminal 200 (web browser 210). Furthermore, in S704, the terminal management app 503 issues an individual URL for the terminal 200. The individual URL is a URL that can be accessed by the terminal 200 (web browser 210) serving as a terminal apparatus from which the scan instruction has been transmitted, and is unique to the session ID (terminal 200).

Next, in S705, the terminal management app 503 sets a status response. Using the issued individual URL, the terminal 200 can transmit a status acquisition request for confirming status information indicating the status (e.g., "scan-in-progress", "scan completed", "error occurring", or the like) of the scan processing being executed by the scan app 502. When a status acquisition request has been received using the individual URL, the terminal management app 503 sets a status response so as to be able to respond to that request.

Thereafter, in S706, the terminal management app 503 notifies access information including the individual URL issued in S703 to the terminal 200 (web browser 210). The notification including the access information is transmitted to the terminal 200 (web browser 210) as a response to the HTTP request received in S701. In the present embodiment, a scan corresponding to the scan instruction accepted in S701 is started here. However, the scan may be started upon accepting the scan instruction in S701, and the scan may be continued in parallel with the processing performed in and after S702. In this case, it is possible to reduce the time required from acceptance of the scan instruction to start of the scan. Note that, in this case, a timeout period in timeout determination in the subsequent S708 may be extended only for the first determination. However, even without such extension, the last access time has not been recorded as in the case of an embodiment described later, and therefore no timeout will occur.

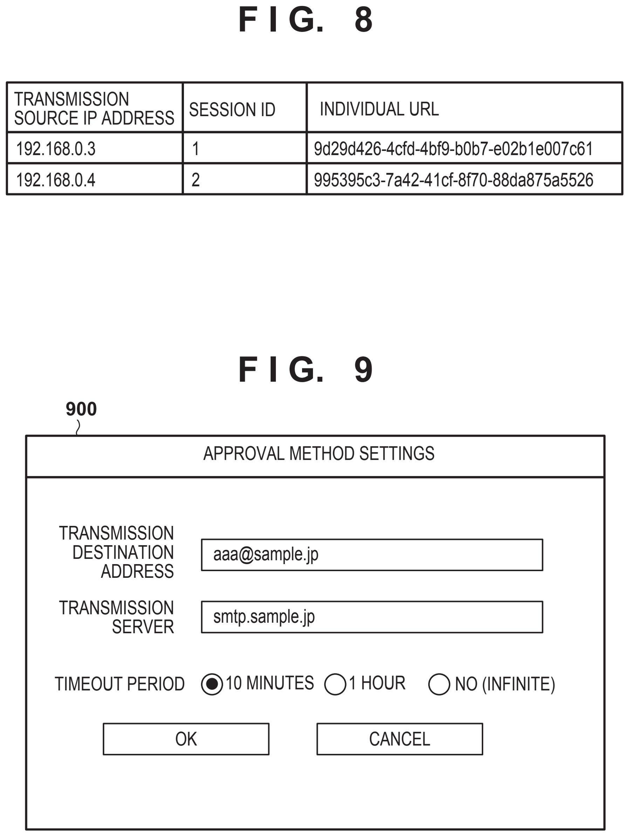

The terminal management app 503 manages the scan setting and scan instruction received from the terminal 200, the transmission source IP address, and the individual URL in association with each other for the session ID generated in S703. FIG. 8 shows an example of a management table used by the terminal management app 503 for managing the terminals that access the image reading apparatus 100. The management table is stored in the storage unit 13, for example. As shown in FIG. 8, the transmission source IP address, the session ID, and the individual URL are stored in association with each other in the management table. Although not shown in FIG. 8, information indicating the scan setting and the scan instruction may be additionally managed in association with the above-described items, or may be managed in association with the session ID in another table. In this manner, upon accepting access from the terminal 200, the terminal management app 503 acquires the IP address of the terminal 200 as a transmission source, and manages the session ID and the individual URL in association with the transmission source IP address.

Assuming that the IP address of the terminal 200 is "192.168.0.3" in the example shown in FIG. 8, the session ID "1" and the individual URL"9d29d426-4cfd-4bf9-b0b7-e02b1e007c61" are issued for the terminal 200. The individual URL actually used for access from the terminal 200 (web browser 210) to the image reading apparatus 100 (web server 500) is represented as "http:// 192.168.0.2/scan/9d29d426-4cfd-4bf9-b0b7-e02b1e007c61/". In S706, the terminal management app 503 notifies access information including the individual URL to the terminal 200 (web browser 210). For example, a JSON format is used as the format of data included in a response transmitted to the terminal 200. In this case, the access information included in the response transmitted to the terminal 200 is represented as { "IP_ADDRESS": "192.168.0.3", "SESSIONID": "1", "uniqueURL":" http://192.168.0.2/scan/9d29d426-4cfd-4bf9-b0b7-e02b1e007c61/" }.

In S707, the terminal management app 503 determines whether access has been made from the terminal 200 to the individual URL notified to the terminal 200 (web browser 210) in S706. The terminal management app 503 confirms whether access has been made from the terminal 200 at a predetermined time interval (e.g., every one second). Note that, in general, this time interval is referred to as a polling interval. The polling interval may be changed by a user operation. The change of the polling interval may be performed, for example, via the operation screen displayed on the operation unit 130 by the UI display app 501, or via a setting application that can be used in a terminal apparatus such as the terminal 200. The setting data indicating the polling interval is stored in the storage unit 13.

The terminal management app 503 advances the processing from S707 to S709 if access has been made from the terminal 200, and advances the processing to S708 if no access has been made therefrom. In S708, the terminal management app 503 determines whether a timeout has occurred as a result of a timeout period having elapsed from the last access time from the terminal 200.

The timeout period is preset, and the setting data is stored in the storage unit 13. Note that, if the last access time has not been recorded, the terminal management app 503 may regard the current time as the last access time, and assume that no timeout has occurred. In general, the timeout period is dependent on the setting of the web server 500 when session maintenance of a browser is lost, but is preferably set to several minutes from the viewpoint of memory saving. In the present embodiment, the timeout period is set to be longer, namely, 30 minutes. The timeout period may be changed by a user operation. The timeout period may be changed, for example, via the operation screen displayed on the operation unit 130 by the UI display app 501.

The terminal management app 503 returns the processing to S707 if the timeout period has not elapsed, and ends the processing in accordance with the procedure of FIG. 7 if the timeout period has elapsed. In the case of ending the processing, the terminal management app 503 causes the scan app 502 to end (abort) the scan processing, and to delete (discard) the image data of the read image saved in the storage unit 13. When an error has occurred during the scan processing performed by the scan app 502 and the error state is not eliminated, the terminal management app 503 also ends the processing in accordance with the procedure of FIG. 7. Even if the error state is eliminated in a state in which the processing performed by the terminal management app 503 has ended, the scan app 502 displays a message indicating that the scan instruction has timed out to the operation unit 130, ends the scan processing, and deletes the image data that has been acquired by the scan processing from the storage unit 13.

Note that if a timeout has occurred in S708 in a state in which the conveyance of originals has not been resumed due to the error state, the terminal management app 503 may display, on the operation unit 130, an error message such as "an XX (e.g., JAM, multi-feed, or cover-open) error is occurring. Since a user operation has not been performed for a predetermined amount of time, the scan operation has been cancelled. At present, it is possible to instruct scan by eliminating the error." Similarly, before a timeout occurs, the terminal management app 503 may display, on the operation unit 130, an error message such as "An XX (e.g., JAM, multi-feed, or cover-open) error is occurring. The scan operation is being continued by the user operation. At present, the user currently performing a scan can acquire an image by eliminating the error."

On the other hand, if the processing is advanced from S707 to S709, the terminal management app 503 updates the last access time stored in the storage unit 13 to the current time in response to access to the individual URL, and advances the processing to S710. In S710, the terminal management app 503 determines whether a notification indicating completion of the scan has been received from the scan app 502. If a notification indicating completion of the scan has been received, the terminal management app 503 advances the processing to S711. On the other hand, if a notification indicating completion of the scan has not been received, the terminal management app 503 communicates with the scan app 502, and acquires the status of the current scan processing. Furthermore, through a response to the HTTP request issued to the individual URL from the terminal 200 (web browser 210), the terminal management app 503 transmits status information indicating the status of the scan processing to the terminal 200 (web browser 210), and returns the processing to S707.

Note that if an error is occurring in the scan processing, the terminal management app 503 transmits status information indicating the error state to the terminal 200. In this case, the web browser 210 displays, on the browser screen, for example, a message prompting the user to eliminate the error state, such as "An error has occurred during the scan. Please eliminate the error in accordance with the display on the screen of the apparatus."

In S711, the terminal management app 503 first notifies, to the terminal 200, completion of the scan processing, through a response to the HTTP request issued to the individual URL from the terminal 200 (web browser 210). Furthermore, in S712, the terminal management app 503 transmits HTML data (screen data) of a scan completion screen to the terminal 200 so as to allow the terminal 200 (web browser 210) to acquire the image data of the read images acquired by the scan processing, and ends the processing. The scan completion screen includes a link for accessing an individual URL for downloading the image data, and the user of the terminal 200 can use the link to instruct downloading of the image data. Alternatively, in response to completion of the scan processing, the terminal management app 503 may guide (i.e., redirect) the web browser 210 to display the scan completion screen so as to change the access destination from the individual URL for acquiring status to the individual URL for downloading.

Note that the terminal management app 503 may cancel, in accordance with a predetermined condition, the management state of the terminal 200 using the management table. For example, when a scan instruction is received from another terminal apparatus different from the terminal 200, the terminal management app 503 may delete the session ID and the individual URL corresponding to the terminal 200 from the management table. Alternatively, when image data of a read image is acquired (downloaded) by the terminal 200, the terminal management app 503 may delete the session ID and the individual URL corresponding to the terminal 200 from the management table. This enables the terminal management app 503 to cancel the management state of the terminal 200 using the management table at an appropriate timing.

As described thus far, in the image reading apparatus 100 of the present embodiment, upon accepting access from a terminal apparatus with which the terminal management app 503 (CPU 11) is communicable via a network, the terminal management app 503 generates a session ID of a session established with the terminal apparatus, and an individual URL unique to the session ID. The terminal management app 503 manages the session ID and the individual URL in association with each other. In accordance with a reading instruction received via the established session, the scan app 502 performs scan processing (reading processing) for reading an image of an original, and generating image data of the read image. As long as access to the individual URL has been accepted at a preset time interval (polling interval), the scan app 502 continues execution of the scan processing.

According to the present embodiment, even if the session with a terminal apparatus is disconnected during execution of the scan processing, the terminal management app 503 can identify (determine) the terminal apparatus based on access to the individual URL. Upon accepting access to the individual URL after completion of the scan processing (even after the session has been disconnected), the terminal management app 503 provides, to the terminal apparatus, an operation screen for acquiring the image data of the read image. This enables the image reading apparatus 100 to transmit the image data of the read image to the terminal apparatus even after the session has been disconnected. Accordingly, it is possible to reduce the possibility that the image data of the read images may be lost due to disconnection of a session, thus improving the user convenience.

At a terminal apparatus, a session with the image reading apparatus 100 may be disconnected due to, for example, transitioning to a power saving mode, or shifting the display screen of the web browser to another screen. In this case as well, as long as the terminal management app 503 holds the session ID and the individual URL that are associated with the IP address of that terminal apparatus, it is possible to acquire the image data of the read image by accessing that individual URL.

As will be illustrated below, various modifications can be made to the above-described embodiment.

(Example 1) In the above-described embodiment, the image reading apparatus 100 performs saving of image data of a read image and access control for the image data. However, these may be performed by a server apparatus (information processing apparatus) external to the image reading apparatus 100. In that case, the image reading apparatus 100 transmits the image data obtained by the scan processing to the server apparatus, and the server apparatus performs management of the received image data and access control for the image data.

(Example 2) In the above-described embodiment, an example is described in which the timeout period used for determination in S708 is set to 30 minutes. However, a first timeout period T1 may be set to several minutes, and a session may be temporarily disconnected when the first timeout period T1 is exceeded. Then, a second timeout period T2 (T1 < T2. For example, T2 = 30 minutes) is set. After the first timeout period T1 has elapsed, the terminal 200 or the user thereof may be notified that polling is interrupted, and, after the second timeout period T2 has elapsed, the processing may determine that a timeout has occurred (Yes in S708).

The above-described notification may be performed, for example, by displaying a message on the operation unit 130 of the image reading apparatus 100, or information that enables identification of the terminal 200 may be stored in the management table of FIG. 8. Based on that information, notification using push notification, near field communication, or the like may be performed.

When the disconnected terminal 200 attempts to make access using the same session ID after the first timeout period T1 has elapsed, the terminal 200 may be allowed to reconnect. That is, upon accepting access using the same session ID from the terminal 200 after the first timeout period T1 has elapsed, the terminal management app 503 may use that session ID to reestablish a session with the terminal 200. Furthermore, at that time, authentication information may be exchanged in additional processing (perform authentication processing for the terminal 200) for establishing reconnection. For example, the authentication information may be acquired and transmitted by reading a QR code (registered trademark) displayed on the operation unit 130 of the image reading apparatus 100.

After the first timeout period T1 has elapsed, another terminal apparatus such as the terminal 300 may be allowed to connect. That is, upon accepting access from another terminal apparatus different from the terminal 200 after the first timeout period T1 has elapsed, the terminal management app 503 may operate to newly establish a session with the other terminal apparatus. At this time, the scan processing being executed by a scan instruction from the terminal 200 may be finalized at that point of time, and only the image data that has been acquired by that time may be downloadable from the terminal 200.

(Example 3) In the above-described embodiment, whether access to an individual URL has timed out is constantly confirmed during execution of the scan processing. However, the present disclosure is not limited thereto. For example, the counting of time may be started upon completion of a scan, and the session may be discarded after the timeout period has elapsed from the completion of the scan. In this case as well, access to the image data during the scan can only be made from the terminal 200 that knows the individual URL, and it is possible to increase the user convenience, while maintaining security.

(Example 4) Not only after an elapse of the first timeout period T1 as in the above-described case of Example 2, the image reading apparatus 100 (CPU 11) may be configured to perform reconnection processing involving authentication of the terminal 200 for a case where access to the individual URL is accepted from the terminal 200 after the session with the terminal 200 has been disconnected. For example, when a reconnection request is received from the terminal 200 after the session has been disconnected, the image reading apparatus 100 requests the terminal 200 to transmit authentication information such as a passcode for authenticating the terminal 200. Upon receiving the authentication information from the terminal 200, the image reading apparatus 100 performs authentication based on the received authentication information, and allows the terminal 200 to access the individual URL only if the authentication is successful.

The request of the authentication information from the terminal 200 may be performed, for example, in the following manner. In response to receiving the reconnection request, the image reading apparatus 100 displays, on the operation unit 130, a two-dimensional code obtained by encoding a randomly generated passcode, and provides, to the terminal 200, an operation screen prompting to read the displayed two-dimensional code. The two-dimensional code is formed, for example, by a QR code (registered trademark). In accordance with the operation screen provided by the image reading apparatus 100 and displayed on the terminal 200, the user reads the two-dimensional code displayed on the operation unit 130, using a camera function (image capturing function) of the terminal 200. The terminal 200 transmits the passcode obtained by reading the two-dimensional code to the image reading apparatus 100.

If the passcode received from the terminal 200 matches the passcode corresponding to the two-dimensional code displayed on the operation unit 130, the image reading apparatus 100 allows the terminal 200 to access the individual URL managed in association with the IP address of the terminal 200. After the access to the individual URL has been allowed, the terminal 200 can resume the scan processing or acquire (download) the image data of the read image obtained by the scan processing by accessing the individual URL in the above-described manner.

(Example 5) After establishing a session with the terminal 200, the image reading apparatus 100 may disconnect the session with the terminal 200 in response to a release request to release the state of occupancy of the image reading apparatus 100 by the user of the terminal 300. For example, when the operation unit 130 is operated by another user, the image reading apparatus 100 determines that a release request has been issued. Even when a session between the image reading apparatus 100 and the terminal 200 is disconnected in response to the release request in this manner, the terminal 200 can resume the scan processing or acquire (download) image data of the read image obtained by the scan processing by accessing the individual URL as in the above-described embodiment. At this time, even when the image reading apparatus 100 is used, for example, by the user who issued the release request, after the session between the image reading apparatus 100 and the terminal 200 has been disconnected, it may be possible to resume the scan processing or acquire (download) image data of the read image obtained by the scan processing by accessing the individual URL from the terminal 200.

### Second Embodiment

In the second embodiment, an example will be described in which the image reading apparatus 100 saves, in a predetermined saving destination, image data of a read image obtained by reading an image of an original, and performs processing for requesting approval from an approval user (e.g., a third party such as a supervisor of the operation user) for acquisition of the image data from the saving destination. As described above, the saving destination of the image data may be the storage unit 13 of the image reading apparatus 100, or an external apparatus (server apparatus) or the like capable of communicating with the image reading apparatus 100. The image reading apparatus 100 controls access to the image data such that an operation user who has instructed execution of the image reading processing can acquire the image data from the saving destination only if approval is obtained from the approval user. Note that the configuration of the second embodiment is the same as the configuration of the image reading apparatus 100 of the first embodiment. The second embodiment may be combined with the first embodiment, or in other words, the image reading apparatus 100 may be configured to perform the processing of the first embodiment and the processing of the second embodiment, or may be configured to perform only the processing of the second embodiment.

### <Setting of Approval Method>

In the image reading apparatus 100, setting of an approval method for performing processing for requesting the above-described approval from the approval user is performed in advance. In the setting of the approval method, for example, setting of a transmission destination of the approval request, setting of the content of data transmitted together with the approval request, setting relating to the approval processing, and the like may be performed. In the present embodiment, setting of the approval method is performed in advance by a user (management user) who manages operation settings of the image reading apparatus 100. The management user can log into the image reading apparatus 100 using the operation unit 130, and perform a setting operation for the image reading apparatus 100. Alternatively, as will be described later, the setting operation is performed from an external apparatus via the web server 500.

Note that the setting of the approval method is performed at any timing before acquisition (transmission) of the image data obtained by the image reading processing, and may be performed, for example, during execution of the image reading processing, after completion of the image reading processing, or before acquisition of the image data. The setting of the approval method may be performed by a user other than the management user of the image reading apparatus 100. When the setting (or modification thereof) is performed by a user other than the management user, information as to who performed the setting may be saved as log information.

FIG. 9 shows an example of a setting screen for setting the approval method. A setting screen 900 in the present embodiment is displayed on the operation unit 130 by the CPU 11 (e.g., an approval management app (not shown) operating on the web server 500), but may be displayed on an external apparatus (e.g., a terminal apparatus such as a PC) capable of communicating with the image reading apparatus 100. In that case, based on screen data (e.g., HTML data) transmitted from the image reading apparatus 100, the displaying of the setting screen on the external apparatus is performed, and input content on the setting screen is transmitted from the external apparatus to the image reading apparatus 100. The image reading apparatus 100 performs setting of the approval method in accordance with the input content received from the external apparatus.

After completion of login processing of the management user into the image reading apparatus 100, the CPU 11 displays the setting screen 900 on the operation unit 130 in accordance with an operation of the management user. As shown in FIG. 9, on the setting screen 900, the transmission destination of the approval request, and the timeout period of the approval processing performed by the approval user can be set. The CPU 11 performs setting of the approval method in accordance with input through the setting screen 900.

On the setting screen 900, an email address and a mail server can be set as the transmission destination of the approval request. In the present embodiment, the transmission of the approval request is performed using email. On the setting screen 900, an email address that the approval user uses to transmit and receive email using the terminal 300 is set as the transmission destination of the approval request. In addition, a mail server that can be used for transmission of the email is set as the transmission server. Note that the setting screen 900 may be configured such that a plurality of transmission destinations can be set. In the case where a plurality of transmission destinations are set, for example, even when a given approval user is absent and cannot perform the approval processing in response to an approval request, another approval user can perform the approval processing.

The timeout period is used to delete image data to be subjected to the approval processing if approval is not performed after an elapse of a predetermined amount of time after transmission of an approval request, thereby ending processing for waiting for approval by the approval user. In the example shown in FIG. 9, for example, one of "10 minutes", "1 hour", and "None (infinite)"can be selected as the timeout period. In the following, the timeout period is set to "10 minutes" as an example.

When an OK button has been pressed on the setting screen 900, the CPU 11 saves, in the storage unit 13, setting data indicating the setting content on the setting screen 900. Note that the setting data may be saved in, for example, an external apparatus that can be communicated with via the communication I/F 15. In that case, the CPU 11 acquires the setting data from the external apparatus and uses the setting data, as needed.

Setting items on the setting screen 900 shown in FIG. 9 are merely examples, and other setting items may be alternatively or additionally present. For example, as the transmission destination of an approval request, a transmission destination for transmitting an approval request using a general communication tool such as chat can be set in place of an email address. In that case, on the setting screen 900, input of only part of information (e.g., an employee ID) may be accepted, and the remaining information (e.g., an email address corresponding to the employee ID) may be acquired from an external database based on the input information. The setting screen 900 may be configured such that a plurality of approval methods can be set (selected).

### <Processing Procedure>

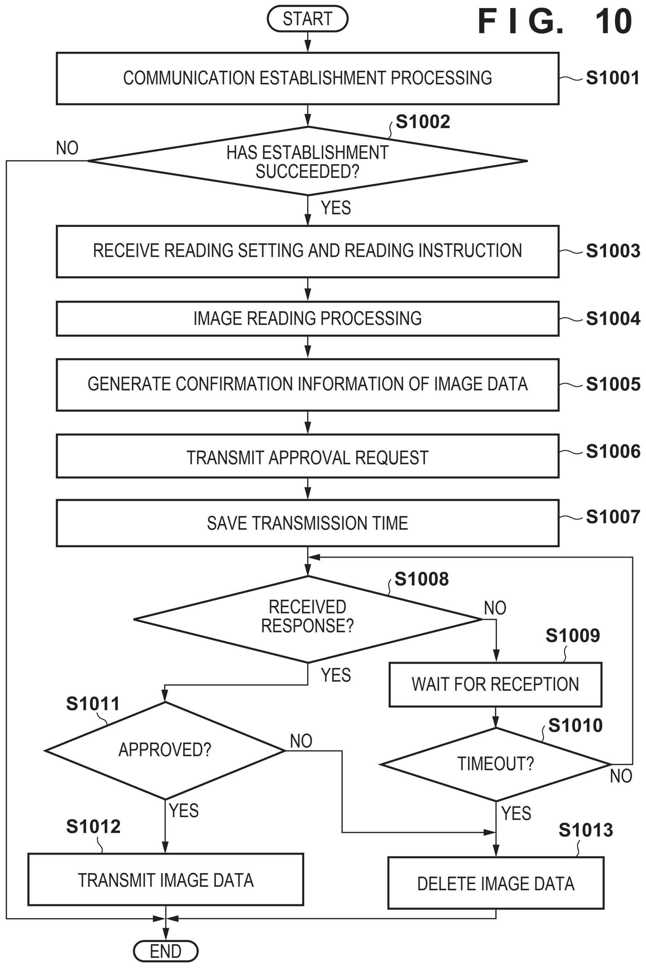

FIG. 10 is a flowchart illustrating an example of a procedure of image reading processing performed in the image reading apparatus 100. In this example, the image reading processing is performed in accordance with a reading instruction transmitted to the image reading apparatus 100 from the terminal 200 that the operation user uses.

The operation user operates the terminal 200 to activate the web browser 210, and inputs, to the URL input field of the browser screen displayed by the web browser 210, a URL (e.g., "http://192.168.0.2/") indicating the web server 500 of the image reading apparatus 100. Thus, the terminal 200 (web browser 210) accesses the web server 500 in order to establish communication with the web server 500 of the image reading apparatus 100. Note that various methods are available as the method for inputting a URL, the inputting may be performed by reading a two-dimensional code or text using the camera function of the terminal 200, and decoding the code or text.

Upon accepting access from the terminal 200 (web browser 210), the web server 500 starts the processing in accordance with the procedure of FIG. 10. In S1001, the web server 500 establishes communication with the terminal 200 in response to the access from the terminal 200. The communication between the image reading apparatus 100 (web server 500) and the terminal 200 is performed using an HTTP protocol, for example. Note that the communication between the image reading apparatus 100 and the terminal 200 may be realized using an application other than the web server 500 of the image reading apparatus 100 and the web browser 210 of the terminal 200.

In S1002, the web server 500 determines whether communication (connection) with the terminal 200 has been successfully established. If communication with the terminal 200 has failed to be established, the web server 500 ends the processing in accordance with the procedure of FIG. 10, and advances the processing to S1003 if communication with the terminal 200 has been successfully established.

Using the terminal 200, the operation user can perform setting relating to reading of images. Based on the HTML data (screen data) acquired from the web server 500, the web browser 210 of the terminal 200 displays, on the display unit of the terminal 200, the scan setting screen 600 (FIG. 6) as a web browser screen. For example, a color mode and a resolution in image reading can be set on the scan setting screen 600. The operation user uses the operation unit (e.g., a touch panel) of the terminal 200 to input a reading setting. When the scan button is pressed on the scan setting screen 600 by the operation user, the web browser 210 of the terminal 200 transmits the reading setting and a reading instruction to the image reading apparatus 100 (web server 500). Thus, in S1003, the web server 500 receives the reading setting and the reading instruction from the terminal 200.

Next, in S1004, the scan app 502 operating on the web server 500 starts execution of image reading processing in accordance with the reading setting and the reading instruction that have been received. The scan app 502 conveys originals set on the original platen 102 one by one in order, and controls the image reading processing so as to perform reading of images of the originals by the image reading unit 104. The image reading processing is continued until there are no originals set on the original platen 102. Note that a predetermined number of originals may be subjected to reading, or the number of originals to be read may be set in the reading setting received from the terminal 200. The scan app 502 saves the image data generated by the image reading unit 104 in the storage unit 13 that is preset as a saving destination. Upon completion of the image reading processing using the scan app 502, the web server 500 advances the processing to S1005.

The processing from S1005 to S1013 may be performed using an approval management app (not shown) operating on the web server 500. This processing is to perform access control in which an approval request for acquiring image data of a read image from the storage unit 13 is transmitted to the approval user, and to enable the operation user to acquire the image data when acquisition of the image data has been approved by the approval user.

First, in S1005, the CPU 11 generates confirmation information of the image data that is to be included in the approval request for transmission. The confirmation information of the image data includes information for enabling the image data of the read image saved in the storage unit 13 to be confirmed by the approval user. In this example, the confirmation information includes a link to an operation screen (or a URL thereof) that enables the confirmation of the image data saved in the storage unit 13 (saving destination). In the present embodiment, upon accepting access using the above-described link, the CPU 11 provides an operation screen to the terminal apparatus (terminal 300) from which the access has been made. The CPU 11 accepts an operation indicating approval or prohibition of acquisition of the image data of the read image via the operation screen displayed on the terminal apparatus (terminal 300). Note that, in the present embodiment, an example is shown in which the saving destination of the image data is the storage unit 13 within the image reading apparatus 100. However, the present disclosure is not limited thereto. For example, the image data may be saved in a cloud server that can be accessed via a network such as the Internet connected to the image reading apparatus 100. In this case, as the access destination of the terminal 300 in the approval processing, the same location in the same cloud server may be set, or another location may be set. For example, even when the saving destination of the image data is a cloud server, if the storage unit 13 within the image reading apparatus 100 is set as the access destination of the terminal 300 in the approval processing, the image reading apparatus 100 may save simple data for confirmation, such as a thumbnail of the image data, in the storage unit 13.

Thereafter, in S 1006, the CPU 11 transmits, to a preset transmission destination via email, an approval request for acquiring the image data of the read image from the storage unit 13, the approval request including confirmation information. Specifically, the CPU 11 refers to the setting data saved in the storage unit 13, and transmits an email including the approval request to the set email address as the destination via the set mail server (transmission server). In the present embodiment, as will be described later, the email transmitted in S 1006 is received by the terminal 300 used by the approval user, and the approval processing is performed in accordance with the approval request. Furthermore, in S 1007, the CPU 11 saves the transmission time of the approval request in the storage unit 13, and advances the processing to S1008. This transmission time is used in timeout determination in S1010 described later. Although email is described as an example of the transmission method for the approval request, the present disclosure is not limited thereto. It is possible to use any means capable of notifying the terminal 300 or the approval user that an approval request has been made.

In S1008, the CPU 11 determines whether a response (approval instruction/prohibition instruction) to the approval request transmitted via email in S 1006 has been received. If the response has yet to be received, the CPU 11 advances the processing to S 1009, and waits for reception of the response for a predetermined amount of time. Thereafter, the CPU 11 advances the processing to S1010.

In S1010, based on the transmission time saved in S1007, the CPU 11 determines whether a preset timeout period has elapsed (a timeout of the approval processing has occurred) from the transmission timing of the approval request. The timeout period is acquired by referring to the setting data saved in the storage unit 13. If the timeout period has not elapsed, the CPU 11 returns the processing to S1008, and waits until the response is received. On the other hand, if the timeout period has elapsed, the CPU 11 advances the processing to S1013.

In S1013, the CPU 11 deletes (discards) the image data of the read image from the storage unit 13 (saving destination), and ends the processing in accordance with the procedure of FIG. 10. Note that, at this time, the CPU 11 may provide, to the terminal 200, a web browser screen including a message indicating that the image data of the read images has been deleted due the occurrence of a timeout of the approval processing. The above-described message may be notified to the operation user, for example, by the web browser 210 of the terminal 200 acquiring screen data (HTML data) from the web server 500 and displaying the screen. Such timeout processing makes it possible to prevent the image data from remaining in the saving destination, unless a response to the approval request is received (approval by the approval user is obtained).

On the other hand, in S1008, if a response to the approval request has been received, the CPU 11 advances the processing to S1011. Note that, in this example, the response is received via the network from the terminal 300 used by the approval user. In S1011, based on the received response, the CPU 11 determines whether acquisition (transmission) of the image data of the read image from the storage unit 13 has been approved by the approval user. The response to the approval request includes an approval instruction or a prohibition instruction. The approval instruction indicates that acquisition of the image data is approved. The prohibition instruction indicates that acquisition of the image data is prohibited.

If the response to the approval request includes the prohibition instruction (if acquisition of the image data has not been approved by the approval user), the CPU 11 advances the processing to S1013. In S1013, the CPU 11 deletes (discards) the image data of the read images from the storage unit 13 (saving destination), and ends the processing in accordance with the procedure of FIG. 10. Note that the CPU 11 may provide, to the terminal 200, a web browser screen including a message indicating that acquisition of the image data has not been approved by the approval user (the approval request has been denied). The above-described message may be notified to the operation user, for example, by the web browser 210 of the terminal 200 acquiring screen data (HTML data) from the web server 500 and displaying the screen.

On the other hand, if the response to the approval request includes the approval instruction (if acquisition of the image data has been approved by the approval user), the CPU 11 advances the processing to S1012. In S1012, the CPU 11 controls access to the image data of the read image saved in the storage unit 13 so as to enable acquisition of that image data. The CPU 11 enables acquisition of the image data by the operation user, for example, by providing, to the terminal 200 of the operation user, an operation screen for downloading the image data from the storage unit 13 (saving destination).

For example, the web browser 210 of the terminal 200 acquires the screen data (HTML data) from the web server 500 to display the operation screen, and accepts an operation performed by the operation user. When the operation user operates a link for downloading the image data, the link being included in the operation screen, the web browser 210 accesses the linked URL. In response to the access made by the web browser 210 of the terminal 200, the web server 500 transmits the image data saved in the storage unit 13 to the terminal 200. In this manner, the web browser 210 may display, on the web browser screen, the read image corresponding to the image data downloaded from the image reading apparatus 100 (web server 500).

Upon completion of downloading of the image data of the read image by the terminal 200 (web browser 210), the CPU 11 ends the processing in accordance with the procedure of FIG. 10.

### <Approval Processing>

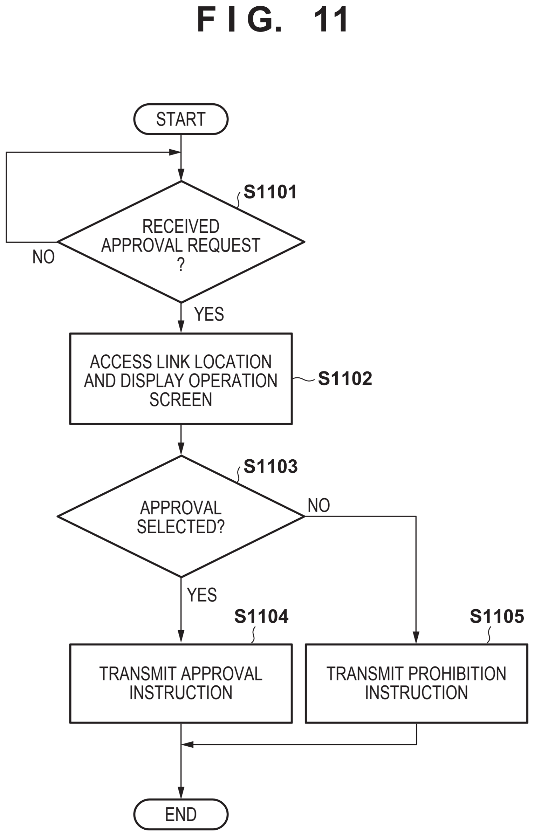

FIG. 11 is a flowchart illustrating an example of a procedure of approval processing performed at the terminal 300 in accordance with an operation of the approval user.

In S1101, in accordance with an operation performed by the approval user, the terminal 300 activates an email application installed in the terminal 300, and receives an email including an approval request using the activated email application. Upon receiving the email including the approval request, the terminal 300 advances the processing to S1102.

After receiving the email, in S1102, in accordance with an operation performed on an link included in the email by the approval user, the terminal 300 accesses a link location using that link. Thus, the terminal 300 displays, on the display unit, an operation screen for accepting an operation indicating approval or prohibition of acquisition of target image data (the image data of the read image saved in the storage unit 13 of the image reading apparatus 100) of the approval processing. In this manner, the image reading apparatus 100 (CPU 11) accepts an operation indicating approval or prohibition of acquisition of the image data by the approval user, via the operation screen provided to the terminal 300. The access to the link location may be performed using a web browser installed in the terminal 300, for example. In that case, the web browser is preferably configured to be activated from the email application.

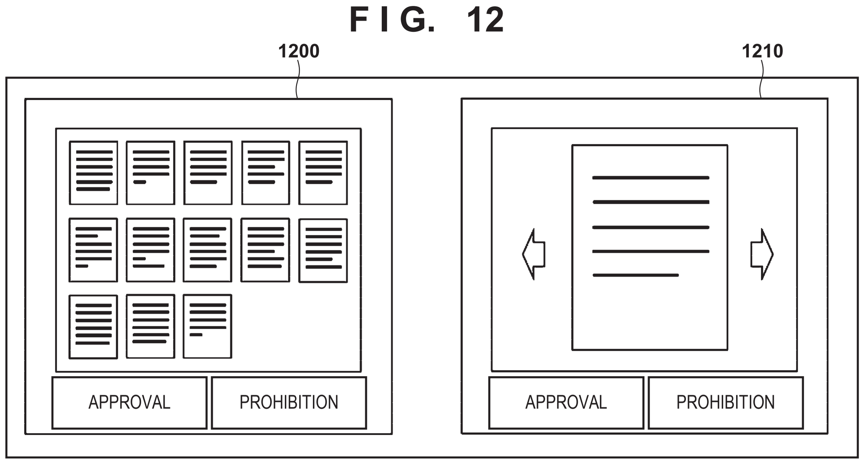

FIG. 12 shows examples (operation screens 1200 and 1210) of the operation screen for the approval processing that are displayed as web browser screens at the terminal 300. The web browser of the terminal 300 acquires screen data (HTML data) corresponding to the operation screen 1200 from the web server 500 of the image reading apparatus 100, and displays the operation screen 1200 as a web browser screen. The operation screen 1200 is configured to display the respective thumbnail images of a plurality of read images obtained by reading a plurality of originals. The operation screen 1200 further includes an approval button for approving acquisition of image data of the read images, and a prohibition button for prohibiting the acquisition. The operation screen 1200 can be modified variously, and may include, for example, information for identifying the operation user. In that case, the approval request received from the image reading apparatus 100 includes such information. Also, such information may be set in the reading setting so as to transmit the target image data to the set transmission destination. In that case, the operation screen 1200 may include information for identifying the transmission destination.

The approval user confirms the thumbnail images displayed on the web browser screen, and operates the approval button or the prohibition button. Thus, the approval user instructs to approve or prohibit acquisition of image data of the read images corresponding to these thumbnail images by the operation user.

The operation screen for the approval processing may be configured as the operation screen 1210 of FIG. 12, for example. The operation screen 1210 is configured to selectively display the plurality of read images one by one in accordance with an operation performed by the approval user. On the operation screen 1200, the approval user can collectively confirm a plurality of read images targeted for the approval processing. On the other hand, the approval user can confirm a more enlarged, individual read image on the operation screen 1210. Note that the operation screen 1200 and the operation screen 1210 may be switchable in accordance with an operation performed by the approval user.

If acquisition of the target image data has been approved by the approval user through operation of the approval button after displaying the operation screen in S1102, the terminal 300 advances the processing to S1104. In S1104, the terminal 300 closes the operation screen for the approval processing, transmits a response including the approval instruction to the image reading apparatus 100 as a response to the received approval request, and ends the processing in accordance with the procedure of FIG. 11.

On the other hand, if acquisition of the target image data is prohibited by the approval user through operation of the prohibition button, the terminal 300 advances the processing to S1105. In S1105, the terminal 300 closes the operation screen for the approval processing, transmits a response including the prohibition instruction to the image reading apparatus 100 as a response to the received approval request, and ends the processing in accordance with the procedure of FIG. 11. Although the response to the approval request is transmitted using, for example, an HTTP protocol, a method other than this (e.g., transmission using an email) may be set.

Note that, in place of the method using a web browser as described above, a general communication tool such as chat may be used to perform confirmation of the target image data using a link included in the approval request, and the operation by the approval user. In that case, a function included in such a tool may be used to perform reception of the link and the target image data, and reply (response) including the approval instruction and the prohibition instruction.

As described thus far, in the image reading apparatus 100 of the present embodiment, the image reading unit 104 reads an image of an original, and generates image data of the read image. The CPU 11 (scan app 502) saves the image data generated by the image reading unit 104 in a predetermined saving destination (storage unit 13). The CPU 11 (approval management app) transmits, to the approval user, an approval request for acquiring the image data saved in the saving destination, the approval request including confirmation information of the image data. Upon receiving a response indicating that the acquisition of the image data has been approved by the approval user as response to the approval request, the CPU 11 (approval management app) controls access to the image data so as to enable acquisition of the image data from an external apparatus such as the terminal 200.

According to the present embodiment, the approval user can confirm image data of a read image by a simple operation, and perform approval for acquiring the image data. Accordingly, it is possible to realize the approval processing for acquiring the image data of the read image, without increasing the burden on the approval user. In addition, the image data can be acquired in accordance with approval by the approval user who has confirmed the image data, and it is therefore possible to efficiently prevent information leakage (outflow of confidential information) attributed to acquisition of the image data. By realizing the approval processing by the approval user, it is possible to more accurately identify confidential information, and prevent outflow of the identified confidential information, as compared with a case where determination of the image data (confidential information) of the read image is mechanically performed.

Note that, in the image reading apparatus 100, the CPU 11 (approval management app) associates the operation user and the approval user with each other for processing such as transmission of an approval request to the approval user, reception of a response to the approval request, or transmission of image data to the operation user, and performs session management. For example, assume a case where, after image reading processing has been performed in accordance with an operation performed by a given operation user, another operation user causes the image reading apparatus 100 to perform the image reading processing before completion of the approval processing performed by the approval user. In this case, two approval requests corresponding to the respective operation users will be transmitted to the approval user. However, with the above-described session management, the approval processing based on the approval requests, and the acquisition of image data based on the results of the approval processing can be appropriately managed.

In the present embodiment, only a link to the operation screen (web page) that enables confirmation of the target image data of the approval processing is transmitted as the confirmation information to the transmission destination of the approval request. However, the present disclosure is not limited thereto. For example, the confirmation information included in the approval request may include a thumbnail image of the read image corresponding to the image data saved in the saving destination (storage unit 13). Alternatively, the confirmation information may include the read image corresponding to the image data saved in the saving destination (storage unit 13). In these cases, the CPU 11 (approval management app) may receive a reply mail to the approval request (email) as a response indicating the approval instruction. In this case, the approval user can confirm the target image data without the need to access the link location, and perform the approval instruction only by transmitting the reply mail.

The confirmation information need not necessarily include the link of the saving destination of the target image data, and may include information from which the information corresponding to the target image data can be confirmed. For example, a thumbnail or other information of the target image data may be stored in a location different from the saving destination of the target image data, and a link to that location may be included as the confirmation information.

The processing (approval management and access control) for the image data of the read image saved in the saving destination may be performed by an apparatus (e.g., an information processing apparatus such as a server apparatus) other then the image reading apparatus 100.

### Third Embodiment

In the third embodiment, an example will be described in which the image reading apparatus 100 performs processing for determining, in accordance with a predetermined switching condition, the transmission destination of image data of read images obtained by reading images of originals, and transmitting the image data to the transmission destination in accordance with a transmission method corresponding to the determined transmission destination. Note that the configuration of the image reading apparatus 100 of the third embodiment is the same as that of the first embodiment. The third embodiment may be combined with the first embodiment, or in other words, the image reading apparatus 100 may be configured to perform the processing of the first embodiment and the processing of the third embodiment, or may be configured to perform only the processing of the third embodiment.

### <Setting of Transmission Method>

In the present embodiment, the image reading apparatus 100 performs, in advance, setting of a transmission method for transmitting image data of read images obtained by reading images of originals. The setting of the transmission method may be performed in advance by a user (management user) who manages the operation setting of the image reading apparatus 100. The management user can log into the image reading apparatus 100, using the operation unit 130, and perform the setting operation for the image reading apparatus 100.

Note that the setting of the transmission method is performed at any timing before acquisition (transmission) of the image data obtained by the image reading processing, and may be performed, for example, during execution of the image reading processing, after completion of the image reading processing, or before transmission of the image data. The setting of the transmission method may be performed by a user other than the management user of the image reading apparatus 100. For example, the setting may be performed by the management user for the first time, and may be performed by another user (e.g., a user corresponding to the set transmission destination) for the next and subsequent times. When the setting (or modification thereof) is performed by a user other than the management user, information as to who performed the setting may be saved as log information.

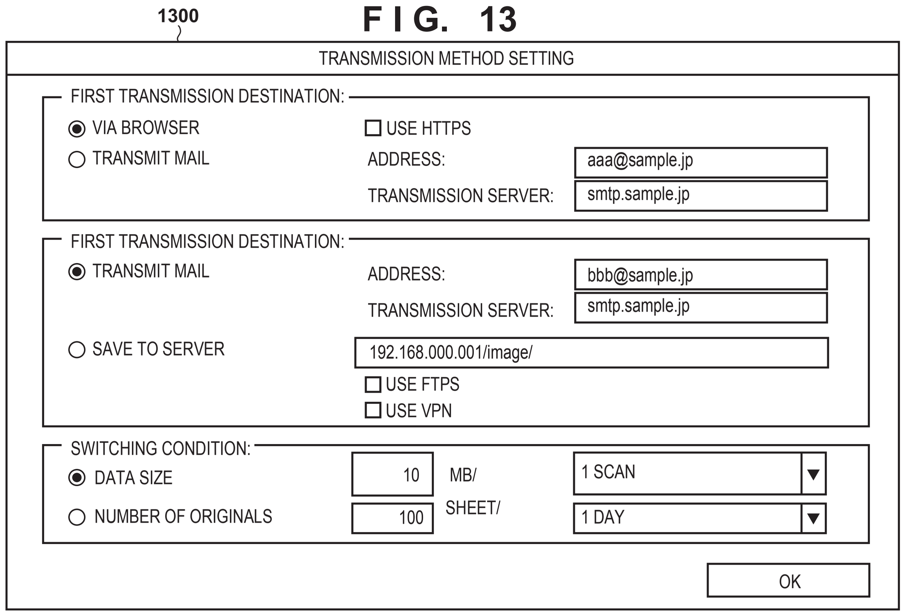

FIG. 13 shows an example of a setting screen for setting the transmission method. A setting screen 1300 in the present embodiment is displayed on the operation unit 130 by the CPU 11 (e.g., a transmission determination app (not shown) operating on the web server 500), but may be displayed on an external apparatus (e.g., a terminal apparatus such as a PC) capable of communicating with the image reading apparatus 100. In that case, based on screen data (e.g., HTML data) transmitted from the image reading apparatus 100, the displaying of the setting screen on the external apparatus is performed, and input content on the setting screen is transmitted from the external apparatus to the image reading apparatus 100. The CPU 11 performs the setting of the setting method in accordance with the input content received from the external apparatus.

On the setting screen 1300, a plurality of transmission methods for transmitting image data of read images corresponding to a plurality of transmission destinations, and a switching condition for switching the transmission destination between the plurality of transmission destinations according to the data amount of the image data are set. The setting of the transmission method includes, for example, the setting of a communication protocol and a communication path that are used for transmission of the image data. Here, for example, two transmission destinations, namely, a first transmission destination and a second transmission destination, can be set on the setting screen 1300. In the present embodiment, the first transmission destination is set to be an operation user who operates the image forming apparatus 100 (so as to transmit the image data to the terminal 200 of the operation user). The second transmission destination is set as a transmission destination different from the first transmission destination so as to transmit the image data to a user who confirms the read images, other than the operation user. The user who confirms the read images is a third party other than the operation user, and may be, for example, a supervisor of the operation user.

### • Setting of First Transmission Destination

On the setting screen 1300, a transmission method via a web browser or a transmission method using email can be selected as the transmission method corresponding to the first transmission destination. The transmission method via a web browser may be, for example, a method in which image data is transmitted in accordance with a download instruction that is transmitted from the web browser 210 of the terminal 200 and that uses a link for accessing a download URL of the image data, or a method in which image data is transmitted as a response to a status acquisition request that is transmitted from the web browser 210 for confirming the status of the scan processing. On the setting screen 1300, whether to use a standard protocol (HTTP) or HTTPS, which is a more secure protocol than the HTTP, as a communication protocol used for the transmission for the transmission method via a web browser can be selected. In addition, an email address serving as a transmission destination, and a mail server serving as a communication path can be set for the transmission method using email.

In the example shown in FIG. 13, as the setting of the transmission method corresponding to the first transmission destination, the transmission method via a web browser is selected, and it is set that HTTPS is not used as the communication protocol (that HTTP is used).

### • Setting of Second Transmission Destination

On the setting screen 1300, a transmission method using email, or a transmission method in which image data is transmitted to a server apparatus (data server) can be selected as the transmission method corresponding to the second transmission destination. For the transmission method using email, an email address serving as a transmission destination, and a mail server serving as a communication path can be set. For the transmission method in which image data is transmitted to a data server, an address indicating the saving destination of the image data on the data server, and a communication protocol and a communication path that are used for transmission can be selected. As the communication protocol, a standard protocol (FTP), or FTPS, which is a more secure protocol than the FTP, can be selected. As the communication path, a path for direct transmission to the data server, or a path using a virtual private network (VPN) can be selected.

In the example shown in FIG. 13, the transmission method using email is selected as the transmission method corresponding to the second transmission destination, and an email address and a mail server that are used for the transmission method are set. In this example, an email address that a third party (who confirms image data of the read images), other than the operation user, uses for transmission and reception of email using the terminal 300 is set as the transmission destination. By transmitting the image data via an email with the set email address as a destination, it is possible to receive the image data by the terminal 300 (and thus the third party can confirm the read images).

Note that the above-described setting items for the first and second transmission destinations on the setting screen 1300 are merely examples, and other setting items may be alternatively or additionally present. For example, a transmission method using a shared folder as a transmission destination can be selected. As a communication protocol used for the transmission method in which the image data is transmitted to the data server, another communication protocol such as SFTP or HTTPS can be selected. As the communication path, a transfer server for transferring image data can be designated. On the setting screen 1300, only minimum setting items may be displayed, and the remaining information (e.g., an email address corresponding to an employee ID) may be acquired from an external database based on the input information.

### • Setting of Switching Condition

On the setting screen 1300, a switching condition for switching from the first transmission destination to the second transmission destination can be further set as a switching condition for the transmission destination when transmitting image data of read images. The switching condition is defined so as to switch the transmission destination of the image data of the read images from the first transmission destination to the second transmission destination, depending on whether the data amount of the image data is greater than or equal to a data amount threshold. In the present embodiment, the data size of the image data or the number of originals (images) that have been read can be selected as a reference based on which the transmission destination is switched. On the setting screen 1300, a period targeted for determination, and a data size threshold or a number of originals threshold can be set for the switching condition for switching the transmission destination based on the data size of the image data or the number of originals.

In the case of using the data size of the image data as a reference, the switching from the first transmission destination to the second transmission destination is performed if the total data size of the image data acquired during the determination target period exceeds a data size threshold. In the case of using the number of originals as a reference, the switching from the first transmission destination to the second transmission destination is performed if the total number of originals that have been read during the determination target period exceeds a number-of-originals threshold. As the determination target period, for example, a period of a single execution of the scan processing, the last hour, or the last day (that day), or the like can be set.

Note that the above-described switching condition settings are merely examples, and any switching condition can be set as long as the condition enables determination that the image reading processing has been performed for a large amount of originals. For example, the number of characters extracted by optical character recognition (OCR) processing from the image data of read images may be used as the switching condition. Also, the determination target period may be set based on the number of executions of the scan processing, for example.

In the example shown in FIG. 13, a switching condition is set in which the transmission destination is switched based on the data size. Specifically, a switching condition is set in which the transmission destination is switched from the first transmission destination to the second transmission destination in accordance with determination that the size of the image data of read images obtained by a single execution of the scan processing is greater than or equal to a data size threshold of 10 MB.

When an OK button has been pressed on the setting screen 1300, the transmission determination app 503 (CPU 11) saves, in the storage unit 13, the setting data indicating the setting content on the setting screen 1300. Note that the setting data may be saved, for example, in an external apparatus that can be communicated with via the communication I/F 15. In that case, the CPU 11 acquires the setting data from the external apparatus and uses the data, as needed.

### <Processing Procedure>

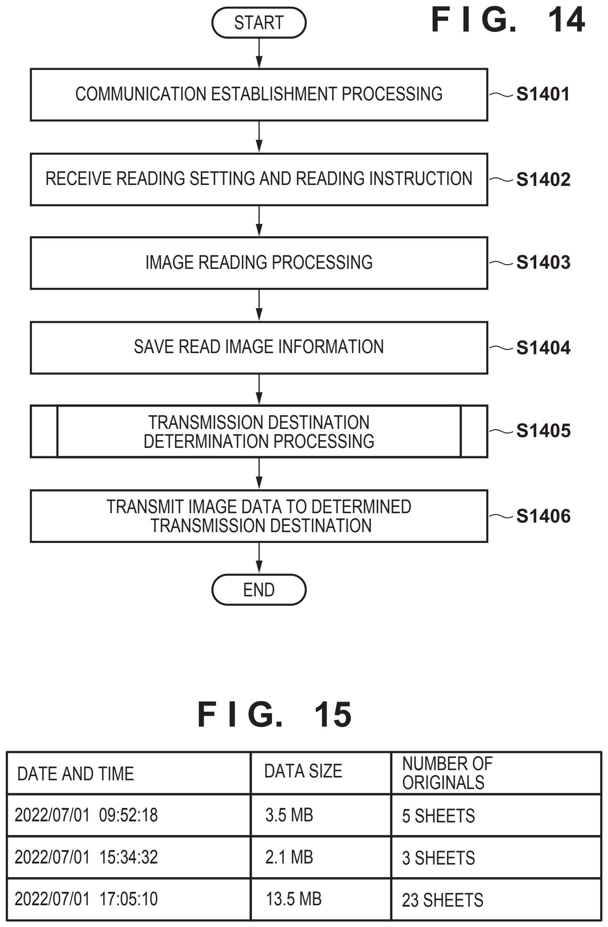

FIG. 14 is a flowchart illustrating an example of a procedure of the image reading processing performed in the image reading apparatus 100. In this example, the image reading processing is performed in accordance with a reading instruction (reading start instruction) transmitted from the terminal 200 used by the operation user to the image reading apparatus 100.

The operation user operates the terminal 200 to activate the web browser 210, and accesses an URL indicating the web server 500 of the image reading apparatus 100, using the web browser 210. Upon accepting the access from terminal 200 (web browser 210), the CPU 11 (web server 500) starts the processing in accordance with the procedure of FIG. 14.

In S1401, the CPU 11 (web server 500) establishes communication with the terminal 200 in response to the access from the terminal 200. The communication between the image reading apparatus 100 (web server 500) and the terminal 200 is performed using an HTTP protocol, for example. Note that the communication between the image reading apparatus 100 and the terminal 200 may be realized using an application other than the web server 500 of the image reading apparatus 100, and the web browser 210 of the terminal 200. When the image reading apparatus 100 and the terminal 200 are connected via USB, the CPU 11 may establish communication with the terminal 200 by transmitting a predetermined command via the USB connection. When the web browser 210 of the terminal 200 is not used for establishing communication between the image reading apparatus 100 and the terminal 200, only the transmission method using email can be used as the transmission method corresponding to the first transmission destination described above.

As described above, the operation user can perform the setting relating to reading of images, using the setting screen 600 (FIG. 6) provided to the terminal 200 from the image reading apparatus 100. When a scan button has been pressed by the operation user on the setting screen 600, the web browser 210 of the terminal 200 transmits the reading setting and a reading instruction to the image reading apparatus 100 (web server 500). Thus, in S1402, the image reading apparatus 100 (web server 500) receives the reading setting and the reading instruction from the terminal 200.

Next, in S1403, the CPU 11 (the scan app 502 operating on the web server 500) starts execution of the image reading processing (scan processing) in accordance with the received reading setting and reading instruction. The CPU 11 conveys originals set on the original platen 102 one by one in order, and controls the image reading processing so as to read images of the originals using the image reading unit 104. The image reading processing is continued until there are no originals set on the original platen 102. Note that a predetermined number of originals may be subjected to reading, or the number of originals to be read may be set in the reading setting received from the terminal 200. The CPU 11 saves the image data generated by the image reading unit 104 in the storage unit 13 that is preset as the saving destination. Upon completion of the image reading processing, the CPU 11 advances the processing to S1404.

In S1404, for processing for determining the transmission destination, which will be described later, the CPU 11 (scan app 502) saves information (read image information) relating to the image data of the read images in the storage unit 13. FIG. 15 shows examples of the read image information saved in S 1404. The read image information includes, for example, the date and time at which the scan processing was performed, the size of the image data obtained by the scan processing, and the number of originals (the number of read images obtained) that have undergone the scan processing. Each time the scan processing is performed, the read image information is saved (added) in a list held in the storage unit 13. Note that old information outside the determination target period set using the setting screen 1300 may be deleted from the list. Alternatively, a timing (e.g., a timing at which a month or a year has elapsed from the saving) at which such information is deleted from the list may be determined, regardless of the determination target period.

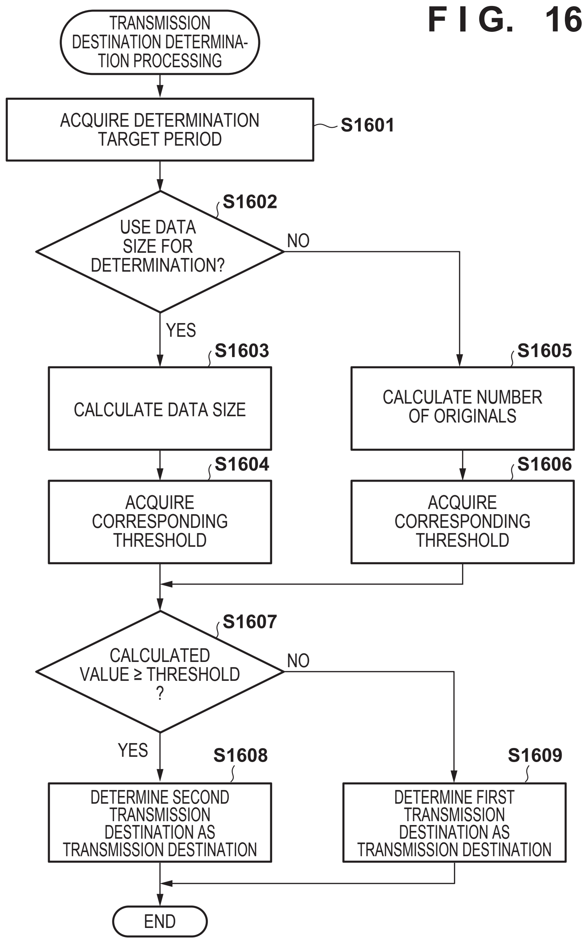

Next, in S1405, the CPU 11 (transmission determination app 503) refers to setting data that is saved in the storage unit 13 and that indicates the setting of a plurality of transmission methods for transmitting the image data, and the setting of the switching condition for the transmission destination. This setting data is generated in advance by the setting using the setting screen 1300, and saved in the storage unit 13. Using the setting indicated by the setting data, the CPU 11 performs the processing for determining the transmission destination (transmission method) of the image data of the read images in accordance with the procedure shown in FIG. 16.

When the transmission destination of the image data has been determined, in S1406, the CPU 11 (web server 500) transmits the image data in accordance with the setting of the transmission method corresponding to the determined transmission destination, thereby performing transmission of the image data to the determined transmission destination.

In the present embodiment, in the case of transmitting the image data to the first transmission destination, the CPU 11 performs transmission of the image data in accordance with the setting content, on the setting screen 1300, of the transmission method corresponding to the first transmission destination. For example, when it is set that the transmission method via a web browser is used, the CPU 11 transmits the image data to the web browser 210 of the terminal 200, using the set communication protocol selected from HTTP and HTTPS. In the case of the transmission method using email, the CPU 11 attaches the image data to an email with the set email address as a destination, and performs transmission of the image data via the set mail server.

In the case of transmitting the image data to the second transmission destination, the CPU 11 performs transmission of the image data in accordance with the setting content, on the setting screen 1300, of the transmission method corresponding to the second transmission destination. For example, in the case of the transmission method using email, the CPU 11 attaches the image data to an email with the set email address as a destination, and performs transmission of the image data via the set mail server. In the case of the transmission method in which the image data is transmitted to a server apparatus (data server), the image data is transmitted to the address of the set data server. At that time, the CPU 11 performs transmission of the image data, using the set communication protocol selected from FTP and FTPS. When a path using a VPN is set as the communication path, transmission of the image data is performed via the VPN. Here, it is assumed that setting information such as a VPN server address that is required for transmission via the VPN is stored in advance in the storage unit 13. In this example, upon receiving a status acquisition request from the terminal 200 (web browser 210) after the image data has been transmitted to the second transmission destination, the image reading apparatus 100 (web server 500) transmits a response including, for example, a specific character string as the status information. This status information indicates that the image data has been transmitted to the second transmission destination (a transmission destination other than the first transmission destination). In this case, the terminal 200 (web browser 210) understands that the image data has been transmitted to the second transmission destination, and displays the setting screen 600 for the reading setting as the web browser screen. Alternatively, the terminal 200 displays a screen (not shown) indicating that the image data has been transmitted to the second transmission destination as the web browser screen.

When the transmission (S1406) of the image data of the read images has been completed, the CPU 11 ends the processing in accordance with the procedure of FIG. 10.

### <Processing for Determining Transmission Destination (S1405)>

FIG. 16 is a flowchart illustrating an example of a procedure of processing (S1405) for determining a transmission destination of image data of read images.

First, in S1601, the CPU 11 (transmission determination app 503) acquires, from the setting data saved in the storage unit 13, a period targeted for determination (determination target period) for the set switching condition. Furthermore, in S1602, the CPU 11 determines whether to use the data size of the image data of the read images for determination for the switching condition. The CPU 11 advances the processing to S1603 if it is set that the data size is used, and advances the processing to S1605 if it is set that the data size is not used (the number of originals that have been read is used).

### (In the Case of Performing Determination Using Data Size)

In S1603, based on the determination target period acquired in S1601, and the read image information saved in the storage unit 13 in S1404, the CPU 11 calculates the total data size of the image data acquired in the determination target period. For example, when the determination target period is set to be a period of a single execution of the scan processing, the size of the image data acquired by the most recent scan processing is acquired. Next, in S1604, the CPU 11 acquires the set data size threshold (in the example of FIG. 13, 10 MB) as a threshold used for determination for the switching condition, and advances the processing to S1607.

In S1607, the CPU 11 determines whether the total data size (calculated value) corresponding to the determination target period is greater than or equal to the data size threshold. If the total data size is greater than or equal to the data size threshold, the CPU 11 advances the processing to S1608, determines the second transmission destination as the transmission destination of the image data of the read images, and ends the processing. On the other hand, if the total data size is not greater than or equal to the data size threshold, the CPU 11 advances the processing to S1609, determines the first transmission destination as the transmission destination of the image data of the read images, and ends the processing.

For example, in the cases of FIGS. 913 and 15, the size of the image data acquired by the most recent scan processing is 13.5 MB. Since the data size threshold is 10 MB, it is determined that the total data size (calculated value) is greater than or equal to the data size threshold. As a result, the second transmission destination is determined as the transmission destination of the image data of the read images.

### (In the Case of Performing Determination Using the Number of Originals)

In S1605, based on the determination target period acquired in S1601, and the read image information saved in the storage unit 13 in S1404, the CPU 11 calculates the total number of originals (the number of obtained read images) that have undergone scan processing in the determination target period. Next, in S1604, the CPU 11 acquires the set number-of-originals threshold (in the example of FIG. 13, 100) as a threshold used for determination for the switching condition, and advances the processing to S1607.

In S1607, the CPU 11 determines whether the total number of originals (the calculated value) corresponding to the determination target period is greater than or equal to the number-of-originals threshold. If the total number of originals is greater than or equal to the number-of-originals threshold, the CPU 11 advances the processing to S1608, determines the second transmission destination as the transmission destination of the image data of the read images, and ends the processing. On the other hand, if the total number of originals is not greater than or equal to the number-of-originals threshold, the CPU 11 advances the processing to S1609, determines the first transmission destination as the transmission destination of the image data of the read images, and ends the processing.

As described thus far, in the image reading apparatus 100 of the present embodiment, the CPU 11 sets a plurality of transmission methods for transmitting image data that respectively correspond to a plurality of transmission destinations. The image reading unit 104 reads images of originals, and generates image data of the read images. In accordance with the switching condition for switching the transmission destination according to the data amount of image data generated by the image reading unit 104, the CPU 11 determines a transmission destination of that image data from among the plurality of transmission destinations. Furthermore, in accordance with the transmission method corresponding to the determined transmission destination, the CPU 11 transmits the image data generated by the image reading unit 104 to the transmission destination.

In the present embodiment, the plurality of transmission destinations may include the first transmission destination and the second transmission destination. The first transmission destination is an operation user (or a terminal apparatus that can be accessed by the operation user) who operates the image reading apparatus 100. The second transmission destination is a user who confirms the read images (or a terminal apparatus that can be accessed by the user) other than the operation user. The switching condition is defined as a condition for switching the transmission destination of the image data of the read images from the first transmission destination to the second transmission destination according to the data amount of the image data.

For example, when a supervisor of the operation user (who is set as the first transmission destination) is set as the second transmission destination, the image data of the read images will be delivered to the supervisor as needed, in accordance with the switching condition of the transmission destination. In this case, the image data can be transferred to the operation user if there is no problem after the supervisor has confirmed the read images, and the image data can be discarded without being transferred if there is a problem. In this manner, it is possible to efficiently prevent outflow of confidential information due to transmission of the image data of the read images.

In the above-described example, the read images are directly confirmed by the supervisor. In this case, as compared with a case where the image data of the read images is mechanically confirmed (e.g., by predetermined image processing), it is possible to more accurately identify the confidential information, and prevent outflow of the identified confidential information. Furthermore, setting the switching condition enables control such that the image data is transmitted to the supervisor only if a large volume of documents have been read. In this manner, if it is envisaged that outflow of a large amount of confidential information will not occur, the image data will not be delivered to the supervisor, thus making it possible to prevent unnecessary increase in time and effort in confirming the read images.

Note that the first transmission destination need not necessarily be set, and a transmission destination that is preset as the first transmission destination, and a transmission method (e.g., a transmission method via a web browser) corresponding thereto may be fixedly used. In this case, an input field for the transmission method corresponding to the first transmission destination need not be displayed on the setting screen 1300.

A plurality of transmission destinations (e.g., the second transmission destination and a third transmission destination) can be set as transmission destinations other than the first transmission destination corresponding to the operation user. For example, in the case of using the data size of image data of read images for determination for the switching condition, a plurality of data size thresholds may be set such that switching between the second transmission destination and the third transmission destination is performed according to the data size. Thus, for example, the third transmission destination may be determined as the transmission destination of the image data if the total data size of the image data is greater than or equal to 50 MB, and the second transmission destination may be determined as the transmission destination of the image data if the total data size is less than 50 MB and greater than or equal to 10 MB. In this case, as an example, control is enabled in which read images need to be confirmed by a person holding a higher post when a larger volume of image data is transmitted.

In the present embodiment, a link (link to an URL of the saving location of the image data) for accessing the image data may be transmitted to the second transmission destination so as to enable the image data to be obtained (viewed) from the second transmission destination without transmitting the image data to the second transmission destination.

In the present embodiment, a mode is described in which the image data is directly transmitted from the image reading apparatus 100 to the first transmission destination or the second transmission destination. However, the present disclosure is not limited thereto. For example, the image data may be transmitted from the image reading apparatus 100 to a predetermined external storage such as a cloud server, and the image data may be transmitted from the external storage to the first transmission destination, or to the second transmission destination. In this case, as described above, only a link for the second transmission destination for accessing the image data may be transmitted from the image reading apparatus 100.

### Fourth Embodiment

In the fourth embodiment, an example in which the scan setting and the scan instruction from the terminal 200 to the image reading apparatus 100 are more simply realized will be described. Note that the configuration of the image reading apparatus 100 of the fourth embodiment is the same as that of the first embodiment. The fourth embodiment may be combined with the first embodiment, or in other words, the image reading apparatus 100 may be configured to perform the processing of the first embodiment and the processing of the fourth embodiment, or may be configured to perform only the processing of the fourth embodiment.

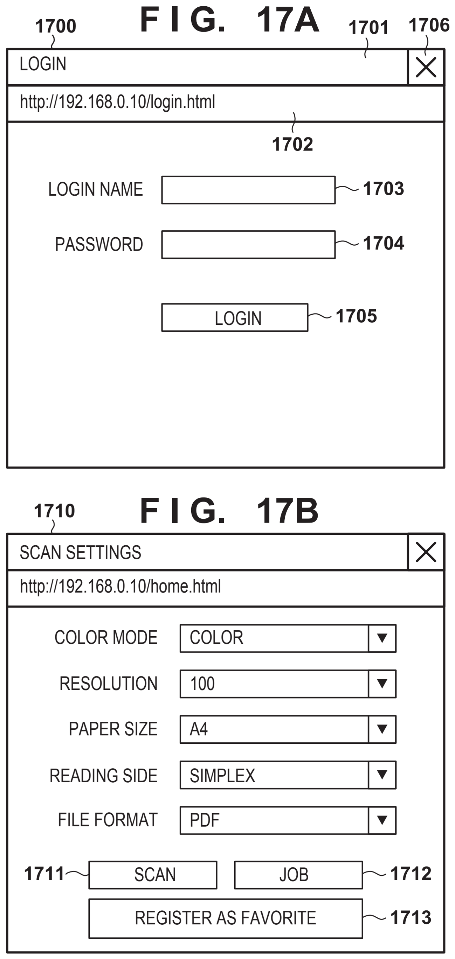

In the present embodiment, when access is made from the terminal 200 to the web server 500, the web browser 210 of the terminal 200 displays an initial screen (a login screen 1700) shown in FIG. 17A as a web browser screen. A title display portion 1701 and a URL display portion 1702 are provided at the upper portion of the login screen 1700. In addition, a login name input edit box 1703, a password input edit box 1704, and a login button 1705 are disposed on the login screen 1700. When an end button 1706 at the upper right of the screen has been pressed, the display of the login screen 1700 ends.

The user inputs a login name and a password into the login name input edit box 1703 and the password input edit box 1704, respectively, and presses the login button 1705, in response to which the web server 500 checks the login name and the password. If the login name and the password are correct, the web server 500 returns, as a response, a scan setting screen 1710 shown in FIG. 17B on which scan setting can be performed. If the login name and the password are incorrect, an error dialog (not shown) "The user name or the password is incorrect " is displayed, and the login screen 1700 remains unchanged.

On the scan setting screen 1710 shown in FIG. 17B, scan settings (image reading settings) can be selected from various items. The items that are selectable as scan settings on the scan setting screen 1710 include a color mode selection menu (options: color/gray/monochrome), a resolution selection menu (options: 100 DPI, 300 DPI), a paper size selection menu (options: A4, letter), a reading side selection menu (options: simplex, duplex), and a file format selection menu (options: PDF, JPEG). The options are all displayed as combo boxes such as pull-down menus.

When the user presses a scan button 1711 after selecting the scan setting, a scan application 502 starts a scan. A scan image obtained by the scan is displayed on a download screen (not shown) for scan images that is displayed by the web browser 210, and then downloaded to the terminal 200 via the web browser 210. Alternatively, the scan image is transmitted to a transmission destination designated on the download screen or another screen.

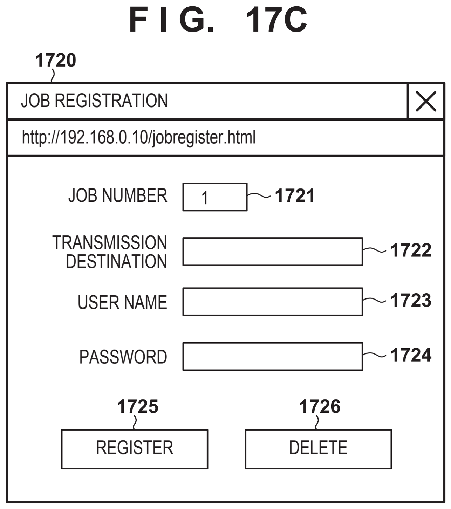

On the other hand, when the user presses a job button 1712 on the scan setting screen 1710, the screen moves to a job registration screen 1720 shown in FIG. 17C. On the job registration screen 1720, a job number input edit box 1721, and an input edit box 1722 for a transmission destination to which the scan image is transmitted from the image reading apparatus 100, and a user name edit box 1723 and a password input edit box 1724 for accessing the transmission destination are provided. The settings input into the input edit boxes 1722 to 1724 correspond to transmission destination settings. As the job number, any number (e.g., 1 to 99) can be input. When the user presses a registration button 1725, the image reading apparatus 100 collectively stores the scan setting set on the scan setting screen 1710 and the transmission destination setting set on the job registration screen 1720 in association with the job number. When the user presses a delete button 1726, the job registered as the relevant job number is deleted.

Note that the job registration can be performed from another information processing apparatus connected to the image reading apparatus 100 via a USB or a network. At this time, regardless of which registration method by which the job is registered, when a job number is designated on the job registration screen shown in FIG. 17C, the setting information of the job stored in associated with the relevant job number may be displayed. In this case, a button for confirming the scan setting may be provided.

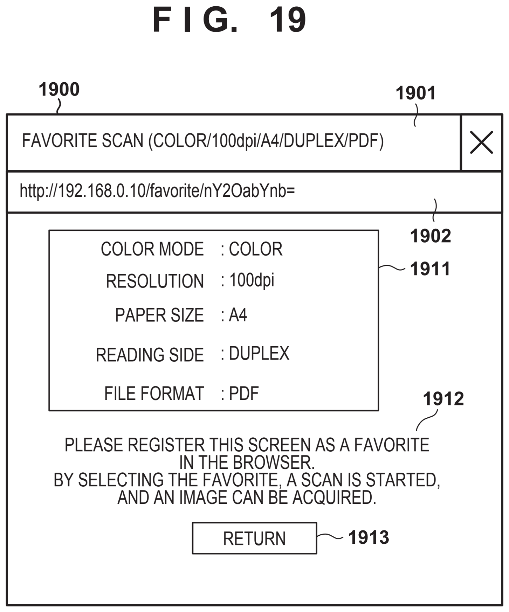

When the user presses a "Register as favorite" button 1713 on the scan setting screen 1710 of FIG. 17B, a favorite registration screen (FIG. 19) is displayed. The favorite registration screen will be described later.

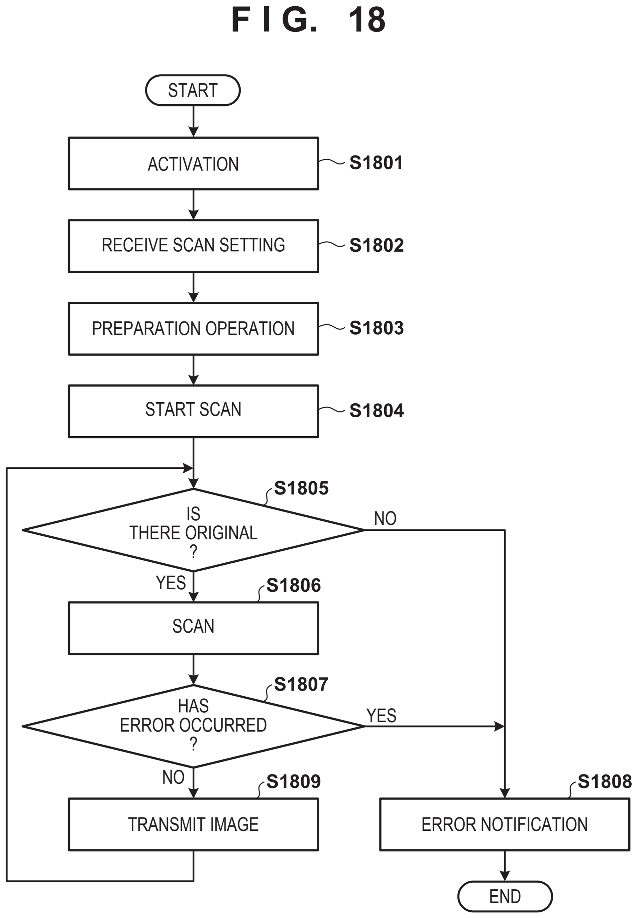

Next, the scan operation will be described with reference to the flowchart of FIG. 18. The scan application 502 is activated from the web server 500, and is on standby (S1801). When a scan instruction is received, a scan setting is received subsequently thereto or simultaneously therewith (S1802).

Next, a preparation operation for starting a scan is performed. Here, information for creating an image, such as shading data and background data, is acquired (S1803). When the preparation operation ends, a scan is started (S1804). When a scan is started, first, whether there is any original on the original platen 102 is confirmed (S1805). If there is any original (Yes in S1805), a scan is performed (S1806). During the scan, whether an error such as multifeed has occurred is confirmed (S1807). If an error has occurred (Yes in S1807), the error is notified (S1808), and the processing ends. If no error has occurred in S1807 (No in S1807), the image is transmitted (S1810). Here, transmitting an image includes, for example, displaying a download screen that enables a read image to be displayed and downloaded. If there are no more originals on the platen 102 (No in S1805), an error indicating the absence of originals is notified (S1808), and the processing ends.

Next, the operation of a job application 504 will be described. As shown in FIG. 5, the image reading apparatus 100 of the present embodiment further includes a job application 504, in addition to the scan application 502 and so forth. The job application 504 is executed when a UI display application 501 accepts a scan start instruction through a user operation. The scan application 502 and the job application 504 control the image reading apparatus 100 via a scanner driver.

In the operation unit 130 shown in FIG. 3, when the user selects a job number and presses a scan start button, the UI display application 501 activates the scan application 502, and acquires an image from the scan application 502. Next, the UI display application 501 activates the job application 504 using the acquired image as an argument. The job application 504 transmits the image according to the transmission setting. In the present embodiment, the image is transmitted to a shared folder of a PC on the network using an SMB protocol. However, the present disclosure is not limited thereto, and the transmission may be performed using FTP, SMTP, or a communication protocol equivalent thereto. The UI display application 501 that activates another application is merely an example, and each application may be activated by any application or process.

FIG. 19 shows a favorite scan screen (screen 1900) displayed by the web browser 210 when the "Register as favorite" button 1713 of FIG. 17B is pressed. A list 1911 of scan settings is displayed on the screen 1900. Note that only some of the scan settings may be displayed on the list 1911. A description 1912 that reads "Please register this screen as a favorite in the browser. By selecting the favorite, a scan is started, and an image can be acquired." for describing that registering as a favorite enables a scan to be directly performed is displayed on the lower portion of the screen 1900, thus prompting the user to register the screen 1900 in a favorites list of the web browser 210. When a back button 1913 is pressed, the screen returns to the scan setting screen 1710 of FIG. 17B.

On a title display portion 1901 of the screen 1900, "color/100 dpi/A4/duplex/PDF" is displayed. This is the content of a <title> tag of HTML. When the user registers the screen 1900 as a favorite in the web browser 210, the title of the favorites list becomes "color/100 dpi/A4/duplex/PDF". The URL displayed in the URL display portion 1902 is generated such that portions thereof following the IP address of the image reading apparatus 100 constitute a unique character string starting with "favorite". When the user accesses this URL for the second and subsequent times, a download screen for acquiring the read image is displayed via the web browser 210, instead of the screen 1900 being displayed. In other words, when the "Register as favorite" button 1713 of FIG. 17B is selected, the image reading apparatus 100 generates the URL shown in FIG. 19, and returns the screen 1900 when access is made from the web browser 210 for the first time. Furthermore, when accessing this URL for the subsequent times, the image reading apparatus 100 performs the reading operation of the image in accordance with the scan setting included in this URL, and returns the URL of a download screen for the read image at this time to the web browser 210, without returning the screen 1900 to the web browser 210. Note that, when accessing the URL shown in FIG. 19 for the second and subsequent times, a scan-in-progress screen (displayed while, for example, the indication "Scan-in-Progress" and the number of completed scans are being updated each time) may be returned to the web browser 210 during a period until completion of the reading operation. Thereafter, the processing advances to S1805 in FIG. 18, and the subsequent processing may be performed.

Here, the reason that the URL of the screen 1900 is configured to include a unique character string is to prevent a third party from guessing this URL. In the present embodiment, the image reading apparatus 100, in particular, the web server 500, functions as a URL generation unit at this time. However, the present disclosure is not limited thereto, and the URL may be generated by other configurations.

Next, an example of a rule for generating a URL including a unique character string will be described. The URL generation processing is performed by the web server 500. First, the web server 500 creates a character string (in the example of FIG. 19, "color/100 dpi/A4/duplex/PDF") in which the scan settings are listed. Furthermore, a character string obtained by listing a login name and a password, followed by hashing, is added after the character string "color/100 dpi/A4/duplex/PDF". Then, the entirety of the resulting character string is base64 encoded. Then, the character string obtained by encoding is connected to the portion of the URL after "favorite", whereby the character string "http://192.168.0.10/favorite/...." is completed.

To extract the scan setting from the URL, the above-described procedure is reversed. Then, the hashed login name and password are extracted. In an authentication check, the login name and password saved within the image reading apparatus 100 are hashed, and these login name and password, and the hashed login name and password extracted from the URL are used to perform the authentication check. If there is no error in the authentication check, the scan setting is extracted from the URL. If an error has occurred in the authentication check, the error is notified (not shown) to the user via the operation unit 130.

Note that the URL generation rule described above is merely an example, and the present disclosure is not limited thereto. For example, the URL may be generated without using a login name and a password, or a time of day, any device information, or the like. Only unique identification information is included in the URL, and the identification information may be associated with the scan setting stored within the image reading apparatus 100, thereby allowing a scan to be performed with the corresponding scan setting when accessing the URL.

Next, the flow until the screen 1900 of FIG. 19 is displayed when the user presses the "Register as favorite" button 1713 will be described. When the user presses the "Register as favorite" button 1713 on the scan setting screen 1710, the web server 500 creates, from the scan setting, the login name, and the password, a URL (in the example of FIG. 19: "http://192.168.0.10/favorite/nY2OabYnb=") including a unique character string. The web server 500 returns a response including an HTTP response code "301" and "Location" as the header added thereto. The currently created URL is placed in "Location". The web browser 210 that has received the response is redirected as a result of confirming the HTTP response code "301". The redirect destination is the URL described in the "Location" header. Thereafter, the screen 1900 of FIG. 19 is displayed.

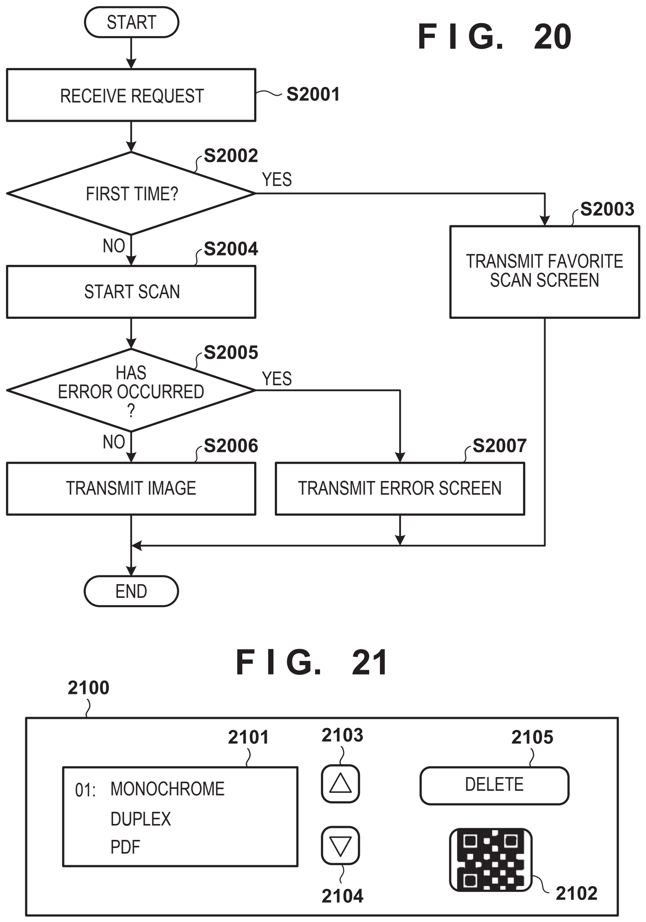

Next, with reference to FIG. 20, the operation performed when the web server 500 receives a request to the generated URL will be described. When the web server 500 receives a request to the generated URL (S2001), the web server 500 checks whether it is the first time that a request to the URL has been received (S2002). If it is the first time, the favorite scan screen (screen 1900) is returned as a response (S2003), and the processing ends.

If it is the second or subsequent time that a request to the URL has been received, the scan application 502 is activated to perform a scan (S2004). If the scan ends normally (No in S2005), the read image is transmitted to the web browser 210 (S2006), and the processing ends. If an error has occurred during the scan (Yes in S2005), the content of the error is displayed, and a screen on which a scan button is disposed to enable rescan is returned to the web browser 210 (S2007), and the processing ends.

Thereby, the user can register the scan setting as a favorite in the web browser 210. By the user simply selecting a favorite registered in the web browser 210, the image reading apparatus 100 can start a scan and acquire an image. Accordingly, the number of steps for starting a scan and steps required until acquisition of an image are reduced, thus making it possible to reduce time and effort. Furthermore, when a shortcut icon that enables direct access to the URL is disposed on a desktop or the like, simply clicking the icon allows a scan to be started to acquire an image, thus making it possible to further reduce time and effort.

Pressing the scan button 1711 on the scan setting screen 1710 shown in FIG. 17B allows a scan to be started with the scan setting set on this screen, and pressing the "Register as favorite" button 1713 on this screen allows the scan setting to be registered as a favorite. That is, the scan setting can be directly registered as a favorite in the web browser 210 during a normal scan operation via the web browser 210, and it is therefore possible to increase convenience. Furthermore, a button having a combined function of the scan button 1711 and the "Register as favorite" button 1713 may be provided, and both the execution of a scan and the registration of favorites can be performed with the scan setting set on the screen.

In the present embodiment, a mode is described in which a login is required when making access from the web browser 210 to the image reading apparatus 100, and the login name and password saved within the image reading apparatus 100 are used to generate the URL of the screen 1900 shown in FIG. 19. However, the present disclosure is not limited thereto. That is, connection can be established without a login when making access from the web browser 210 to the image reading apparatus 100, and thereafter the URL of the screen 1900 shown in FIG. 19 may be generated without using login information. In this case, it is preferable to use device information, time information, or the like to generate the URL.

In the present embodiment, when the user selects a favorite from the web browser 210, a scan is started in accordance with the scan setting of the job set via the job registration screen 1720 of FIG. 17C, and an image can be acquired. However, the present disclosure is not limited thereto. A job saved in advance in the image reading apparatus 100 may be registered as a favorite. A scan setting and a transmission destination of an image are registered in the job. In this case, when the user selects a favorite from the web browser 210, the image reading apparatus 100 starts a scan in accordance with the job setting, and a scan image is transmitted to the transmission destination (e.g., a shared folder) set in association with the URL. In this mode, the URL of the screen 1900 shown in FIG. 19 is generated by including a job number in the URL.

When the job has been deleted, the user can no longer make access with a favorite in the web browser 210. In this case, the web browser 210 displays the job registration screen 1720 of FIG. 17C, and prompts the user to perform reregistration.

### Fifth Embodiment

In the following, a fifth embodiment of the present invention will be described. Note that the same components as those of the fourth embodiment are denoted by the same reference numerals, the description thereof has been omitted, and only differences therebetween will be described.

FIG. 21 shows an example of the screen displayed on an operation unit 130 of an image reading apparatus 100 according to the present embodiment. A screen 2100 shown in FIG. 21 includes a job display portion 2101, a two-dimensional code display portion 2102, switching buttons 2103 and 2104, and a delete button 2105.

In the present embodiment, a UI display application 501 displays, on the two-dimensional code display portion 2102, a two-dimensional code including a URL for performing a scan (quick scan), execution of which is triggered by access to the URL described in the fourth embodiment. In the example of FIG. 21, a job with a job number "01" is displayed on the job display portion 2101, and a two-dimensional code displayed on the two-dimensional code display portion 2102 includes the job information with the job number "01". When the switching button 2103 or 2104 is pressed on the screen 2100, the job displayed on the job display portion 2101 is switched, and the two-dimensional code displayed on the two-dimensional code display portion 2102 is also switched to a two-dimensional code including the job information. By pressing the delete button 2105, the job information displayed on the job display portion 2101 can be deleted.

In this manner, an image of the two-dimensional code displayed on the two-dimensional code display portion 2102 can be captured using a camera or the like of the terminal 200, and a URL obtained by decoding the two-dimensional code can be accessed. This URL corresponds to the URL of the screen 1900 shown in FIG. 19 described in the fourth embodiment. That is, in a state in which the URL is saved for the image reading apparatus 100 in order to allow the URL to be displayed on the operation unit 130, subsequent accesses can be determined as the second and subsequent accesses, and the operation as described in the first embodiment can be performed.

At this time, in addition to the content registered as a job in the image reading apparatus 100, the two-dimensional code and scan setting corresponding to the URL with which the screen 1900 of FIG. 19 is displayed via the "Register as favorite" button 1713 of FIG. 17B may be displayed in association with each other on the screen 2100 shown in FIG. 21.

The invention is not limited to the foregoing embodiments, and various variations/changes are possible within the spirit of the invention.

This application claims priority from Japanese Patent Application Nos. 2023-107199 filed June 29, 2023, 2023-092652 filed June 5, 2023, and 2023-096444 filed June 12, 2023, which are hereby incorporated by reference herein.

## Claims

1. An image reading apparatus comprising:
management means for, in a case where access is accepted from a terminal apparatus communicable via a network, establishing a session with the terminal apparatus and managing the session; and
processing means for, in accordance with a reading instruction received via the session, performing reading processing for reading an image of an original to generate image data of the read image,
wherein the processing means continues execution of the reading processing as long as access has been accepted via the session at a preset time interval.

2. The image reading apparatus according to claim 1, wherein
the management means generates a URL unique to a session ID of the session, and manages the session ID and the URL in association with each other, and
the processing means continues execution of the reading processing as long as access to the URL has been accepted, as the access via the session, at the preset time interval.

3. The image reading apparatus according to claim 2, further comprising
providing means for, in a case where access to the URL is accepted after completion of the reading processing, providing, to the terminal apparatus, an operation screen for acquiring the image data.

4. The image reading apparatus according to claim 3, wherein
in a case where access to the URL is accepted after completion of the reading processing, the providing means redirects the terminal apparatus so as to change an access destination to a URL for acquiring the image data.

5. The image reading apparatus according to claim 3 or 4, wherein
even after the session is disconnected, in a case where access to the URL is accepted after completion of the reading processing, the providing means provides the operation screen to the terminal apparatus.

6. The image reading apparatus according to any one of claims 3 to 5, wherein
in a case where a request for confirming a status of the reading processing is received from the terminal apparatus via the URL, the providing means transmits a response indicating the status of the reading processing to the terminal apparatus, and, if the reading processing is complete, further provides the operation screen to the terminal apparatus.

7. The image reading apparatus according to any one of claims 3 to 6, wherein
in a case where access to the URL is accepted at a time that is after the reading processing is complete and is before a timeout period from a last access time to the URL elapses, the providing means provides the operation screen to the terminal apparatus.

8. The image reading apparatus according to claim 7, further comprising
storage means for storing the image data generated by the reading processing,
wherein in a case where the timeout period from the last access time elapses, the processing means deletes the image data from the storage means.

9. The image reading apparatus according to any one of claims 2 to 6, wherein
in a case where a first timeout period from a last access time to the URL elapses, the management means temporarily disconnects the session established with the terminal apparatus, and,
in a case where a second timeout period longer than the first timeout period from the last access time elapses, the processing means stops execution of the reading processing.

10. The image reading apparatus according to claim 9, further comprising
storage means for storing the image data generated by the reading processing,
wherein in a case where the second timeout period from the last access time elapses, the processing means deletes the image data from the storage means.

11. The image reading apparatus according to claim 9 or 10, further comprising
notification means for, after the first timeout period elapses, notifying a user of the terminal apparatus that access to the URL at the time interval has been interrupted.

12. The image reading apparatus according to claim 11, wherein
the notification means performs notification using a message displayed on a display unit of the image reading apparatus, or notification to the terminal apparatus using near field communication.

13. The image reading apparatus according to any one of claims 9 to 12, wherein
in a case where access using the session ID is accepted from the terminal apparatus after the first timeout period elapses, the management means reestablishes the session with the terminal apparatus using the session ID.

14. The image reading apparatus according to claim 13, wherein
when reestablishing the session with the terminal apparatus, the management means performs authentication processing for the terminal apparatus.

15. The image reading apparatus according to any one of claims 9 to 14, wherein
in a case where access is accepted from another terminal apparatus different from the terminal apparatus after the first timeout period elapses, the management means operates to newly establish a session with the other terminal apparatus.

16. The image reading apparatus according to any one of claims 2 to 8, wherein
in a case where a timeout period from a completion time of the reading processing elapses, the management means disconnects the session with the terminal apparatus.

17. The image reading apparatus according to any one of claims 2 to 16, wherein
in a case where access is accepted from the terminal apparatus, the management means acquires an IP address of the terminal apparatus as a transmission source IP address, and manages the session ID and the URL in association with the transmission source IP address.

18. The image reading apparatus according to any one of claims 2 to 17, wherein
the management means stores and manages the session ID and the URL in a management table, and,
in a case where a reading instruction is received from another terminal apparatus different from the terminal apparatus, the management means deletes the session ID and the URL from the management table.

19. The image reading apparatus according to any one of claims 2 to 18, wherein
the management means stores and manages the session ID and the URL in a management table, and,
in case where the image data is acquired by the terminal apparatus, the management means deletes the session ID and the URL from the management table.

20. A control method for an image reading apparatus, the control method comprising:
in a case where access is accepted from a terminal apparatus communicable via a network, establishing a session with the terminal apparatus and managing the session; and
in accordance with a reading instruction received via the session, performing reading processing for reading an image of an original to generate image data of the read image,
wherein in the performing, execution of the reading processing is continued as long as access has been accepted via the session at a preset time interval.

21. A program for causing a computer of an image reading apparatus to execute the control method for the image reading apparatus according to claim 20.
